# EUROPEAN PATENT SPECIFICATION

(11) **EP 4 580 963 B1**
(45) Date of publication and mention of the grant of the patent: **11.11.2026**
(21) Application number: 23762170.1
(22) Date of filing: 21.08.2023
(51) Int. Cl.: B65G 1/04

(54) **AN AUTOMATED STORAGE AND RETRIEVAL SYSTEM COMPRISING A FIRST TYPE OF CONTAINER HANDLING VEHICLE, A CRANE AND A GANTRY ARRANGEMENT, AND A METHOD OF TRANSFERRING A STORAGE CONTAINER**
AUTOMATISIERTES REGALBEDIENUNGSSYSTEM MIT EINEM ERSTEN CONTAINERHANDHABUNGSFAHRZEUG, KRAN UND PORTALANORDNUNG SOWIE VERFAHREN ZUM ÜBERFÜHREN EINES LAGERBEHÄLTERS
SYSTÈME DE STOCKAGE ET DE RÉCUPÉRATION AUTOMATISÉ COMPRENANT UN PREMIER TYPE DE VÉHICULE DE MANUTENTION DE CONTENEUR, UNE GRUE ET UN AGENCEMENT DE PORTIQUE, ET PROCÉDÉ DE TRANSFERT D'UN CONTENEUR DE STOCKAGE

(30) Priority: 30.08.2022 NO 20220932
(43) Date of publication of application: 09.07.2025
(73) Proprietor: AutoStore Technology AS, 5578 Nedre Vats (NO)
(72) Inventor: MÜLLER, Kenneth, 5545 VORMEDAL (NO); VIKINGSTAD, Geir, 5535 HAUGESUND (NO)
(74) Representative: Smith, Mark David
(86) International application number: PCT/EP2023/072923
(87) International publication number: WO 2024/046797

(56) References cited:
- WO-A1-2019/086237
- WO-A1-2021/239509

## Description

The present invention relates to an automated storage and retrieval system comprising a two-dimensional rail system a first type of container handling vehicle operating on a rail system, the automated storage and retrieval system comprises:
- a crane comprising a first lifting device comprising a first lifting frame suspended from lifting bands, wherein the first lifting device is configured to transfer a storage container stored in a stack of storage containers to the container carrier of the first type of container handling vehicle;
- a gantry arrangement arranged at a port area of the rail system, at which port area the upper ends of the port columns are arranged, wherein the gantry arrangement comprises a first cross-member and a first lifting frame raisable at a level above an uppermost part of a storage container carried by the container carrier of the first type of container handling vehicle and is configured to transfer a storage container between the container carrier and a port column.

The invention further relates to a method of transferring a storage container from a storage position in a stack of storage containers to a port area of a rail system of an automated storage and retrieval system.

### BACKGROUND AND PRIOR ART

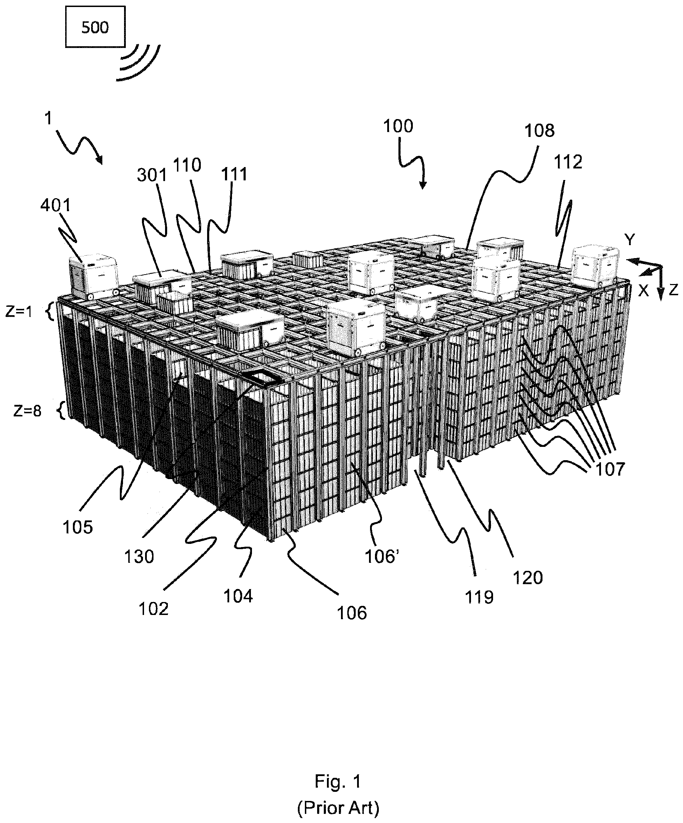

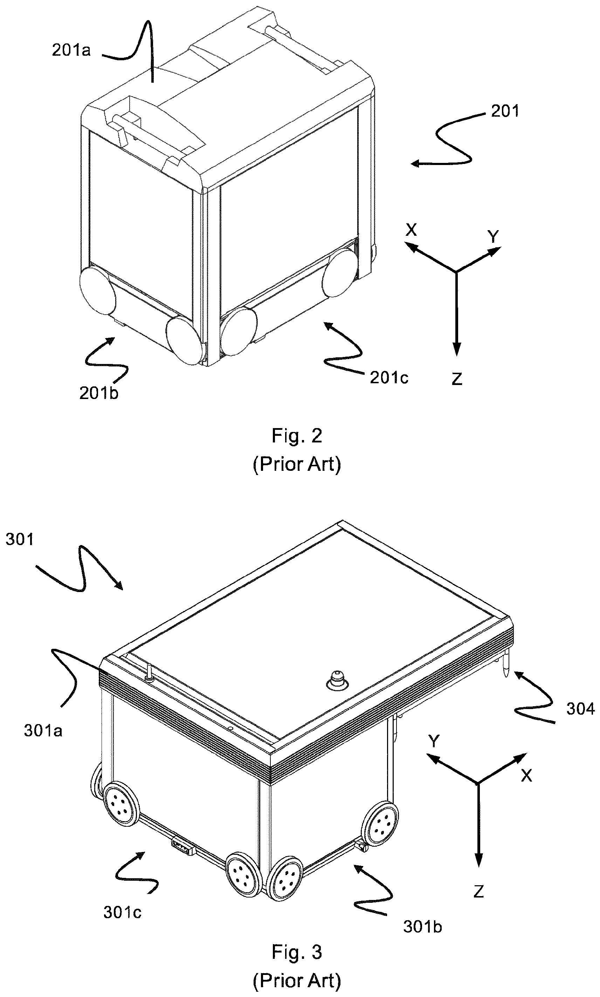

Fig. 1 discloses a prior art automated storage and retrieval system 1 with a frame structure 100 and Figs. 2, 3 and 4 disclose three different prior art container handling vehicles 201,301,401 suitable for operating on such a system 1.

The frame structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The frame structure 100 of the automated storage and retrieval system 1 comprises a rail system 108 arranged across the top of frame structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction X across the top of the frame structure 100, and a second set of parallel rails 111 arranged perpendicular to the first set of parallel rails 110 to guide movement of the container handling vehicles 201,301,401 in a second direction Y which is perpendicular to the first direction X. Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal *X-Y* plane.

The upright members 102 of the frame structure 100 may be used to guide the storage containers during raising of the containers out from and lowering of the containers into the columns 105. The stacks 107 of containers 106 are typically self-supporting.

Each prior art container handling vehicle 201,301,401 comprises a vehicle body 201a,301a,401a and first and second sets of wheels 201b, 201c, 301b, 301c,401b,401c which enable the lateral movement of the container handling vehicles 201,301,401 in the X direction and in the Y direction, respectively. In Figs. 2, 3 and 4 two wheels in each set are fully visible. The first set of wheels 201b,301b,401b is arranged to engage with two adjacent rails of the first set of parallel rails 110, and the second set of wheels 201c,301c,401c is arranged to engage with two adjacent rails of the second set of parallel rails 111. At least one of the sets of wheels 201b, 201c, 301b,301c,401b,401c can be lifted and lowered, so that the first set of wheels 201b,301b,401b and/or the second set of wheels 201c,301c,401c can be engaged with the respective set of parallel rails 110, 111 at any one time.

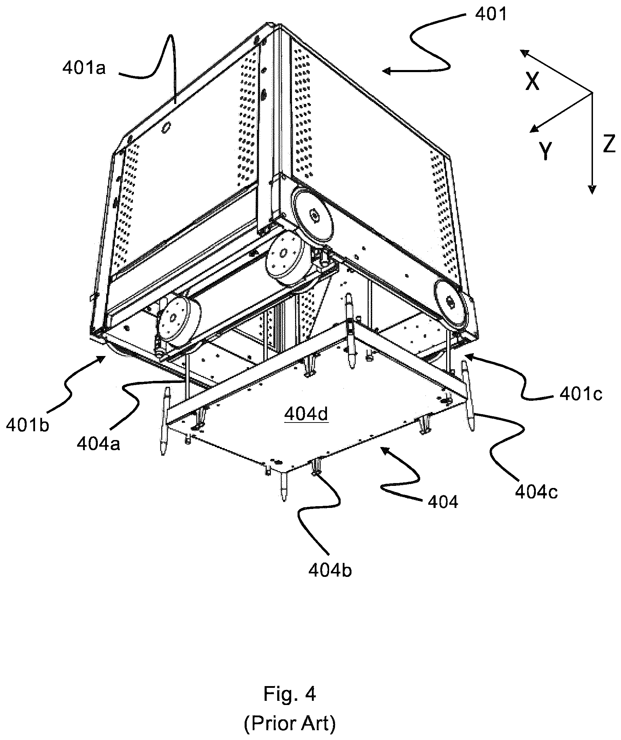

Each prior art container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction Z which is orthogonal the first direction *X* and the second direction Y. Parts of the gripping device of the container handling vehicles 301,401 are shown in Figs. 3 and 4 indicated with reference number 304,404. The gripping device of the container handling device 201 is located within the vehicle body 201a in Fig. 2 and is thus not shown. The lifting device may comprise a lifting frame 404d suspended from lifting bands 404a. The lifting bands 404a may provide power and communication between the container handling vehicle and the lifting frame 404d. The lifting frame 404d may comprise gripping engaging devices/grippers 404b for connection to gripping recesses of a storage container 106. Guide pins 404c assist in aligning the grippers 404b relative the gripping recesses of the storage container 106.

Conventionally, and also for the purpose of this application, Z=1 identifies the uppermost layer available for storage containers below the rails 110,111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1*...n* and *Y=*1*...n* identifies the position of each storage column 105 in the horizontal plane. Consequently, as an example, and using the Cartesian coordinate system *X*, *Y, Z* indicated in Fig. 1, the storage container identified as 106' in Fig. 1 can be said to occupy storage position *X*=17, *Y*=1, *Z*=6. The container handling vehicles 201,301,401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the frame structure 100 has often been referred to as a grid 104, where the possible storage positions within this grid are referred to as storage cells. Each storage column may be identified by a position in an *X-* and *Y*-direction, while each storage cell may be identified by a container number in the *X-, Y-* and Z-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a,401a as shown in Figs. 2 and 4 and as described in e.g. WO2015/193278A1 and WO2019/206487A1.

Fig. 3 shows an alternative configuration of a container handling vehicle 301 with a cantilever construction. Such a vehicle is described in detail in e.g. NO317366.

The cavity container handling vehicle 201 shown in Fig. 2 may have a footprint that covers an area with dimensions in the X and Y directions which is generally equal to the lateral extent of a storage column 105, e.g. as is described in WO2015/193278A1. The term 'lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

WO2018/146304A1 illustrates a typical configuration of rail system 108 comprising rails and parallel tracks in both *X* and *Y* directions.

In the frame structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the frame structure 100 or transferred out of or into the frame structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the frame structure 100, then picked up by any container handling vehicle and transported to a port column 119,120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a drop-off port column where the container handling vehicles 201,301,401 can drop off storage containers 106 to be transported to an access or a transfer station, and the second port column 120 may be a pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the frame structure 100 again once accessed. A port can also be used for transferring storage containers to another storage facility (e.g. to another frame structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different frame structures, e.g. as is described in WO2014/075937A1.

A storage system may also use port columns 119,120 to transfer a storage container between the rail system 108 on top of the frame structure 100 and a container transfer vehicle, i.e. a so-called first type of container handling vehicle or delivery vehicle used herein, arranged below a lower end of the port column. Such storage systems and suitable container transfer vehicles are disclosed in WO 2019/238694 A1 and WO 2019/238697 A1.

A potential disadvantage of using a container transfer vehicle to retrieve and deliver storage containers from/to the lower end of a port column is the time dependency between the container transfer vehicle(s) and the container handling vehicles used to retrieve/deliver the storage containers through the port column.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the frame structure 100, the content of each storage container 106; and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

WO2021/239509 A1, which was identified as the "closest prior art" during the examination procedure of the EPO, discloses, according to its abstract, "a container handling vehicle (10) for lifting a storage container (106) from an underlying framework structure (100), the vehicle comprises a vehicle body (8) and a container lifting assembly (3,5) for lifting the storage container; the vehicle body (8) comprises a wheeled base (9), a support (11) and at least one cantilevered section (6); wherein the wheeled base (9) comprises a first set of wheels (21a), arranged on opposite sides of the vehicle body (8), for moving the vehicle (10) along a first direction (X) on a rail grid (108) at a top level of the underlying framework structure (100), and a second set of wheels (21b) arranged on other opposite sides of the vehicle body (8), for moving the vehicle (10) along a second direction (Y) on the rail grid (108), the second direction (Y) being perpendicular to the first direction (X); and the support (11) comprises a lower end (17) connected to the wheeled base (9) and an upper portion (18) connected to the cantilevered section (6); the container lifting assembly comprises a lifting frame (3) and a plurality of lifting bands (5), the lifting frame (3) being for releasable connection to a storage container (106) and suspended from the cantilevered section (6) by the lifting bands (5), such that the lifting frame (3) may be raised or lowered relative to the cantilevered section (6); the cantilevered section (6) extends laterally from the upper portion (18) of the support (11) and is arranged to rotate horizontally about a vertical axis relative to the wheeled base (9) between a first position and a second position, in the first position, the cantilevered section (6) extends beyond the wheeled base (9), such that the lifting frame (3) may retrieve or deliver a storage container (106) from/to a storage column of the framework structure (100), and in the second position the cantilevered section (6) extends in an opposite direction relative to the direction in the first position, wherein the support (11) holds the cantilevered section (6) above the wheeled base (9) at a height corresponding to a height of multiple storage containers, such that a vertical distance (H3) between the lifting frame (3), when the lifting frame (3) is in an upper position, and the lower end (17) of the support (11) is larger than the height of two storage containers stacked on top of each other.".

WO 2019/086237 A1 discloses, according to its abstract, "an automated storage and retrieval system comprising: - a rail system (8) comprising a first set of parallel tracks (10) arranged in a horizontal plane (P) and extending in a first direction (X), and a second set of parallel tracks (11) arranged in the horizontal plane (P) and extending in a second direction (Y) which is orthogonal to the first direction (X), which first and second sets of tracks (10,11) form a grid pattern in the horizontal plane (P) comprising a plurality of adjacent grid cells, each comprising a grid opening (12) defined by a pair of neighboring tracks (10a,10b) of the first set of tracks (10) and a pair of neighboring tracks (10a,10b) of the second set of 10 tracks (11); and - a plurality of stacks (7) of storage containers (6) arranged in storage columns (5) located beneath the rail system (8), wherein each storage column (5) is located vertically below a grid opening (12); characterised in that the system further comprises: 15 a multi trolley vehicle (100) for transporting storage containers (6) between the storage columns (5) and at least one deployment area (25, 26, 80), which deployment area (25, 26, 80) provides direct access to an area outside the grid pattern formed by the first and second sets of tracks (10, 11), the multi trolley vehicle (100) comprising: a trolley assembly (72) comprising a plurality of trolleys (72') coupled to each other 20 along at least one of the first direction (X) and second direction (Y), where each trolley (72') provides at least one container volume for storing at least one of the storage containers (6) and where each trolley (72') comprises moving devices (14, 15) allowing movement of the trolley assembly (72) in at least one of the first direction (X) and/or the second direction (Y), and where at least one of the trolleys (72') comprises non-motorized moving devices (14, 15), and a first drive vehicle (70) coupled to the trolley assembly (72), the first drive vehicle (70) comprising motorized moving devices (14, 15) allowing self-propelled 30 movement of the first drive vehicle (7) and thereby the multi trolley vehicle (100) in at least one of the first and second directions corresponding to the at least one of the first and second directions of the trolley assembly (72), such that the multi trolley vehicle (100) is horizontally movable. It is further described a multi trolley vehicle operated on said storage and retrieval 35 system, and a method of operating the storage and retrieval system.".

An objective of the invention is to provide a more efficient system where a storage container stacked in a stack of storage containers can be transferred faster to a port area.

### SUMMARY OF THE INVENTION

The present invention is set forth and characterized in the independent claims, while the dependent claims describe other characteristics of the invention.

The present invention relates to an automated storage and retrieval system comprising a two-dimensional rail system comprising a first set of parallel rails in a horizontal plane arranged to guide movement of container handling vehicles in a first direction across the top of a frame structure, and a second set of parallel rails in the horizontal plane arranged perpendicular to the first set of parallel rails to guide movement of the container handling vehicles in a second direction which is perpendicular to the first direction, the frame structure defining a plurality of storage columns for accommodating vertical stacks of storage containers,
wherein the automated storage and retrieval system comprises:
- a port column through which a storage container may be transferred between an upper end and a lower end of the port column;
- a first type of container handling vehicle operating on the rail system, the first type of container handling vehicle comprises a first set of wheels for movement on the rail system in the first direction and a second set of wheels for movement on the rail system in the second direction, and a container carrier for supporting a storage container, the container carrier being configured to receive a storage container from above;
- a crane comprising a first lifting device comprising a first lifting frame suspended from lifting bands, wherein the first lifting frame is raisable at a level above an uppermost part of a storage container carried by the container carrier of the first type of container handling vehicle and is configured to transfer a storage container stored in a stack of storage containers to the container carrier of the first type of container handling vehicle;
- a gantry arrangement arranged at a port area of the rail system, at which port area the upper ends of the port columns are arranged, wherein the gantry arrangement comprises a first cross-member, a crane trolley assembly comprising a first crane trolley suspended from the first cross-member and a first lifting frame suspended by lifting bands from the crane trolley, wherein the lifting frame is raisable at a level above an uppermost part of a storage container carried by the container carrier of the first type of container handling vehicle and is configured to transfer a storage container between the container carrier and the port column.

The fact that the first lifting frame of the container handling vehicle and the first lifting frame of the gantry arrangement are raisable at a level above an uppermost part of a storage container carried by the container carrier of the first type of container handling vehicle is to be understood that a lowermost part of a storage container carried by the first lifting frames is in a plane above an uppermost part of a storage container carried by the container carrier.

The crane is preferably configured to perform high-speed digging operations.

The first type of container handling vehicle has a configuration providing maximum stability for transporting a storage container over large distances.

The a gantry arrangement is configured to:
- retrieve a storage container from the container carrier of the first type of container handling vehicle;
- position a storage container on the container carrier of the first type of container handling vehicle;
- serve as a buffer for storage containers to be picked by an operator.

In one aspect, the crane may be a second type of container handling vehicle operating on the rail system and which crane may comprise a first set of wheels for movement on the rail system in the first direction and a second set of wheels for movement on the rail system in the second direction.

In one aspect, the gantry arrangement may be in a fixed position over the port area.

In one aspect, the crane may comprise a first cantilever section and the first lifting device may be suspended from the first cantilever section.

Instead of cantilever section, it may be possible that the first lifting device, and any additional lifting device(s), may be supported from sections including a supported end.

In one aspect, the crane may be configured to pick storage containers from two different stacks on different sides of the crane. This/these operation(s) does not necessarily have to happen simultaneous/simultaneously, but may be performed e.g. by means of rotating the first cantilever section 180 degrees relative the vehicle body.

In one aspect, the crane may comprise a second cantilever section and a second lifting device, and the second cantilever section may be arranged on an opposite part of a body of the crane relative the first cantilever section, and the second lifting device may be suspended from the second cantilever section. This may be advantageous in that it is possible to operate in different stacks at the same time and/or by retrieving or placing a storage container on one or more delivery vehicle(s) at the same time.

In one aspect, the second lifting device may be configured for simultaneous operation with the first lifting device.

In one aspect, the crane may comprise:
- a third cantilever section arranged perpendicular to the first cantilever section and the second cantilever section, and a third lifting device suspended from the third cantilever section; and
- a fourth cantilever section arranged perpendicular to the first cantilever section and the second cantilever section on an opposite side of the body compared to the third cantilever section, and a fourth lifting device suspended from the fourth cantilever section.

The first, second, third and fourth cantilever sections may together form a cross-shaped cross section. It is apparent that instead of a cross-shaped cross section, it is possible that the first, second, third and fourth cantilever sections form part of a rounded or square upper part forming a rounded or square cross section, respectively.

In one aspect, the first crane trolley is movable along the first cross-member.

In one aspect, the crane trolley may be movable between a position where it can transfer a storage container to and from the port column and a position where it can transfer a storage container to and from a buffer stack of storage containers.

In one aspect, the gantry arrangement comprises a second crane trolley assembly comprising a second crane trolley suspended from the first cross-member. The second crane trolley may be movable along the first cross-member.

In one aspect, the gantry arrangement may comprise a second cross-member parallel to the first cross-member, and a crane trolley assembly comprising a crane trolley may be suspended from the second cross-member.

The crane trolley assembly can be a second crane trolley assembly if only one crane trolley is suspended from the first cross-member or it can be a third crane trolley assembly if a first and second crane trolleys are suspended from the first cross-member.

In one aspect, all of the lifting frames of the crane trolley assemblies in the gantry arrangement may be raisable at a level above an uppermost part of a storage container carried by the container carrier of the first type of container handling vehicle and they may be configured to transfer a storage container between the container carrier and the port column.

It is described a guiding solution ensuring that the lifting frame suspended from the crane trolley assembly is always guided preventing or minimizing horizontal movement. The solution has a first vertical movement range and a second vertical movement range.

For example, if the crane trolley assembly is arranged above a rail system of an automated storage and retrieval system, guiding of the lifting frame is also ensured when the lifting frame is above the rail system. The first vertical movement range may be above the rail system and the second vertical movement range may be below the rail system guiding against upright members of a frame structure, where the upright members may be arranged in each corner of the lifting frame.

The present invention relates to a crane trolley assembly comprising:
- a crane trolley configured for guided movement along a beam or cross-member of a gantry arrangement;
- a lifting frame configured for connection to a storage container to lift the storage container from above through a first vertical movement range and a second vertical movement range of the lifting frame;
- a plurality of lifting bands suspending the lifting frame below the crane trolley for lifting and lowering the lifting frame through at least the second vertical movement range; and
- a stabilizer extending below the crane trolley;
wherein a lower end of the stabilizer is configured to interact with the lifting frame in order to stabilize the lifting frame during the first vertical movement range of the lifting frame, and wherein the stabilizer and the lifting frame are configured to move vertically relative each other when in the second vertical movement range of the lifting frame.

The distance between the stabilizer and the lifting frame increases when the lifting frame continues to move vertically below a reach of the lower end of the stabilizer.

The stabilizer may have a maximum reach which is shorter than the maximum reach of the lifting bands.

The stabilizer can be seen as a guide or guide arm.

The first and second vertical movement ranges may be subsequent movement ranges, i.e. the second vertical movement range succeeds the first vertical movement range, and vice versa. In other words, the first and second vertical movement range do not overlap each other. The first vertical movement range starts at the crane trolley and extends a first distance downwards, whereas the second vertical movement range starts where the first distance ends and extends a second distance downwards.

The stabilizer may be configured to stabilize the lifting and lowering of the lifting frame by guiding movement of the lifting frame in a vertical direction below the crane trolley while restricting horizontal movement of the lifting frame during the first vertical movement range of the lifting frame when the lower end of the stabilizer interacts with lifting frame.

The present invention also relates to a method of transferring a storage container from a storage position in a stack of storage containers to a port area of a rail system of an automated storage and retrieval system as described above, wherein the method comprises the steps of:
- using the first lifting device of the crane to pick up a storage container from the stack and raising the first lifting device in a raised position with the storage container;
- positioning the container carrier of the first type of container handling vehicle directly below the raised first lifting device;
- lowering the first lifting device with the storage container to lower the storage container onto the container carrier of the first type of container handling vehicle;
- moving the first type of container handling vehicle with the storage container to the gantry arrangement at the port area of the rail system;
- either a) moving the first type of container handling vehicle such that the container carrier is) directly below the crane trolley assembly of the gantry arrangement or b) positioning the crane trolley assembly of the gantry arrangement directly above the container carrier of the first type of container handling vehicle; and
- picking up the storage container from the container carrier using the first lifting frame of the crane trolley assembly.

The steps of the method are performed in reverse order to transfer the storage container from the access station to a storage position in the stack.

The method may comprise the step of lowering the storage container through the port column to the lower end of the port column.

The method may comprise the step of positioning the storage container in a stack of storage containers at the port area.

The method may comprise the step of temporary storing the storage container at the crane trolley assembly of the gantry arrangement.

It is further described a gantry arrangement arranged at a level above a rail system of an automated storage and retrieval system as defined above, wherein the gantry arrangement comprises a first cross-member and a first lifting device raisable at a level above an uppermost part of a storage container carried by a container carrier of a first type of container handling vehicle and is configured to transfer a storage container between the container carrier and a port column of the rail system.

The automated storage and retrieval system may comprise a plurality of upright members and each storage column is defined by four of the upright members.

The rail system may be arranged on top of the upright members, and the rail system may comprise a first set of parallel rails and a second set of parallel rails arranged perpendicular to the first set of parallel rails. The first and second set of rails providing a horizontal grid-based rail system defining a plurality of grid cells.

In the present specification the term "storage container" is intended to mean any goods holder unit having a bottom plate and side portions suitable for releasable connection to the container lift device, e.g. a bin, a tote, a tray or similar. The side portions may preferably comprise gripping recesses. The side portions are preferably sidewalls. The height of the sidewalls may vary depending on the intended use of the automated storage and retrieval system and the goods to be stored. The gripping recesses may be arranged at an upper rim of the sidewalls. The outer horizontal periphery of the storage container is preferably rectangular.

The relative terms "upper", "lower", "below", "above", "higher" etc. shall be understood in their normal sense and as seen in a cartesian coordinate system.

The invention may be used in connection with storage containers and systems as described above. However, other areas where the disclosed automated storage and retrieval system and methods may be used is within vertical farming, micro-fulfilment or grocery/e-grocery.

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a frame structure of a prior art automated storage and retrieval system;
Fig. 2 is a perspective view of a prior art container handling vehicle having an internally arranged cavity for carrying storage containers therein;
Fig. 3 is a perspective view of a prior art container handling vehicle having a cantilever for carrying storage containers underneath;
Fig. 4 is a perspective view, seen from below, of a prior art container handling vehicle having an internally arranged cavity for carrying storage containers therein;
Fig. 5 is a perspective view of the container handling vehicle in Fig. 4 without side and top panels;
Fig. 6A is an overview of an automated storage system according to the invention with a port area, where the system comprises a number of first type of container handling vehicles, cranes and gantry arrangements;
Fig. 6B is an enlarged view of the port area in Fig. 6A where three gantry arrangements are arranged in the port area;
Fig. 6C is a further enlarged view of the port area in Figs. 6A and 6B seen from a different angle than in Figs. 6A and 6B;
Fig. 7A is a side perspective view of a gantry arrangement at a port area of an automated storage and retrieval system;
Fig. 7B is a side perspective view of the gantry arrangement in Fig. 7A seen from the other side;
Fig. 7C is a side view of the gantry arrangement in Figs. 7A and 7B;
Fig. 7D is another side view of the gantry arrangement in Figs. 7A, 7B and 7C, seen from a perpendicular angle relative the view in Fig. 7C;
Fig. 7E is a top view of the gantry arrangement in Figs. 7A, 7B, 7C and 7D;
Fig. 7F is a side perspective view from below of the gantry arrangement in Figs. 7A, 7B, 7C, 7D and 7E;
Figs.7G-7J are different views of a crane trolley assembly according to a first embodiment comprising a stabilizer for stabilizing a lifting frame suspended from lifting bands from a crane trolley within a first vertical movement range, where Fig. 7A is a perspective view where the lifting frame is within the first vertical movement range, Fig. 7H is a side view of Fig. 7G, Fig. 7I is another side view perpendicular to Fig. 7H, and Fig. 7J is a perspective view where the lifting frame is within a second vertical movement range below the first vertical movement range;
Figs. 7K-7M are different views of a crane trolley assembly according to a second embodiment comprising a stabilizer for stabilizing a lifting frame suspended from lifting bands from a lower end of the stabilizer, wherein the lifting frame is stabilized by the stabilizer when within a first vertical movement range, where Fig. 7K is a perspective view where the lifting frame is within a second vertical movement range below the first vertical movement range, Fig. 7L is a side view of Fig. 7K from a first angle and Fig. 7L is a side view of Fig. 7K from a second angle;
Fig. 8 is a side perspective view of a part of a storage and retrieval system showing a number of the first type of container handling vehicles cooperating with two cranes;
Fig. 9A is a side perspective view of an exemplary crane with four lifting devices;
Fig. 9B is a side view of the crane in Fig. 9A;
Fig. 10 is a side perspective view of an example first type of container handling vehicle;

### DETAILED DESCRIPTION OF THE INVENTION

In the following, embodiments of the invention will be discussed in more detail with reference to the appended drawings. It should be understood, however, that the drawings are not intended to limit the invention to the subject-matter depicted in the drawings.

A frame structure 100 of the automated storage and retrieval system 1 may be constructed in a similar manner to the prior art frame structure 100 described above in connection with Figs. 1. That is, the frame structure 100 may comprise a number of upright members 102, and comprise a first, upper rail system 108 extending in the X direction and Y direction.

The frame structure 100 may comprise storage compartments in the form of storage columns 105 provided between the members 102 wherein storage containers 106 may be stackable in stacks 107 within the storage columns 105.

The frame structure 100 can be of any size. In particular, it is understood that the frame structure can be considerably wider and/or longer and/or deeper than disclosed in Fig. 1. For example, the frame structure 100 may have a horizontal extent of more than 700x700 columns and a storage depth of more than twelve containers.

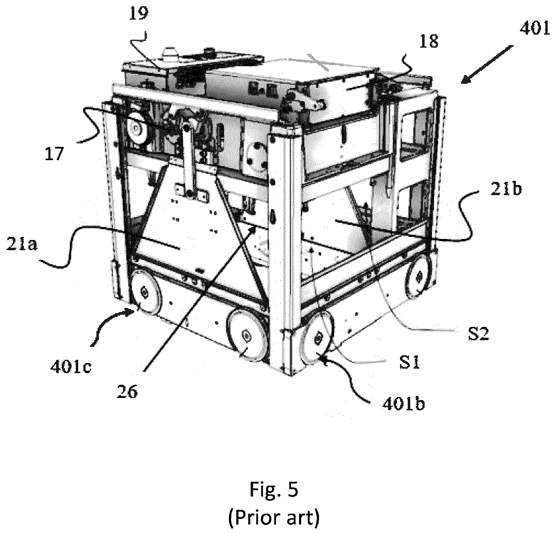

The prior art container handling vehicles comprising a cavity for accommodating a storage container, see figs. 2, 4 and 5, have certain advantageous features. In particular, the guidance/support provided to a storage container when accommodated in the cavity entails that the vehicles may have increased acceleration/retardation relative to the cantilevered container handling vehicle 301 shown in fig. 3.

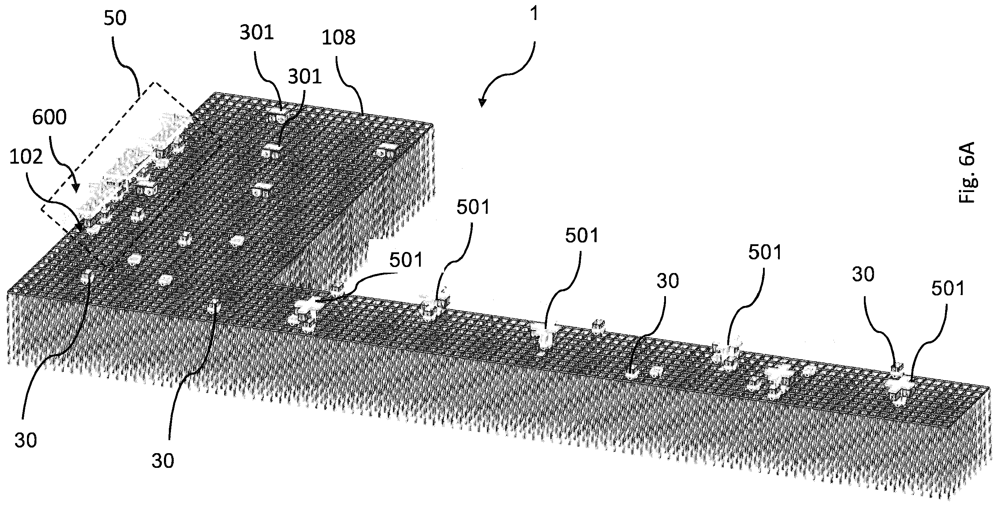

Fig. 6A is an overview of an automated storage system 1 according to the invention with a port area 50, where the system 1 comprises a number of first type of container handling vehicles 30, cranes 501 and gantry arrangements 600. The system 1 further comprises a number of prior art cantilever container handling vehicles 301. The gantry arrangements 600 are arranged at the port area 50 of the system 1. The port area 50 of the system 1 is where the upper ends of the port columns 119,120 are arranged. The port columns 119,120 serves as a transfer channel through which a storage container 106 may be transferred between an upper end and a lower end of the port column 119,120. The cranes 501 are preferably configured to perform high-speed digging operations, however they are not designed to move fast between position A and position B on top of the rail system 108. The first type of container handling vehicle 30 however is not capable of perform digging but is rather designed with maximum stability in order to transfer storage containers fast between position A and position B on top of the rail system 108. The prior art cantilever container handling vehicles 301 pick up a storage container 106 from an underlying stack and bring the storage container 106 to the port area 50 themselves.

As such, in order for the system 1 to be effective, the cranes 501 are preferably arranged at a relatively large distance from the port area 50 such that the first type of container handling vehicles 30 received storage containers 106 from the cranes 501 and transfer the storage containers to the port area 50, whereas the prior art cantilever container handling vehicles 301 are preferably arranged at a relatively close distance from the port area 50.

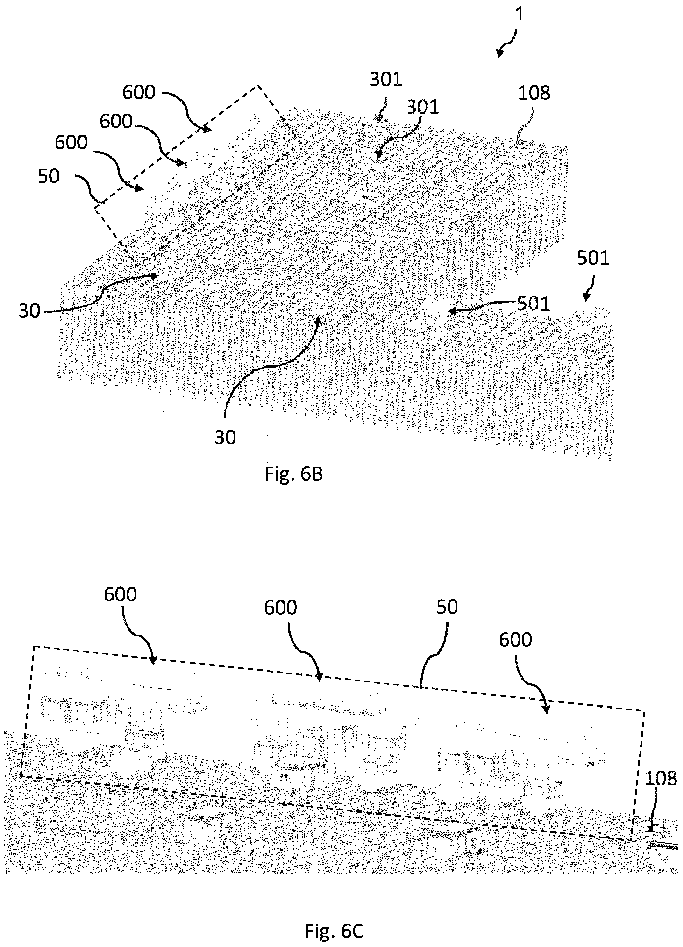

Fig. 6B is an enlarged view of the port area 50 in Fig. 6A where three gantry arrangements 600 are arranged in the port area 50.

Fig. 6C is a further enlarged view or the port area 50 in Figs. 6A and 6B seen from a different angle than in Figs. 6A and 6B.

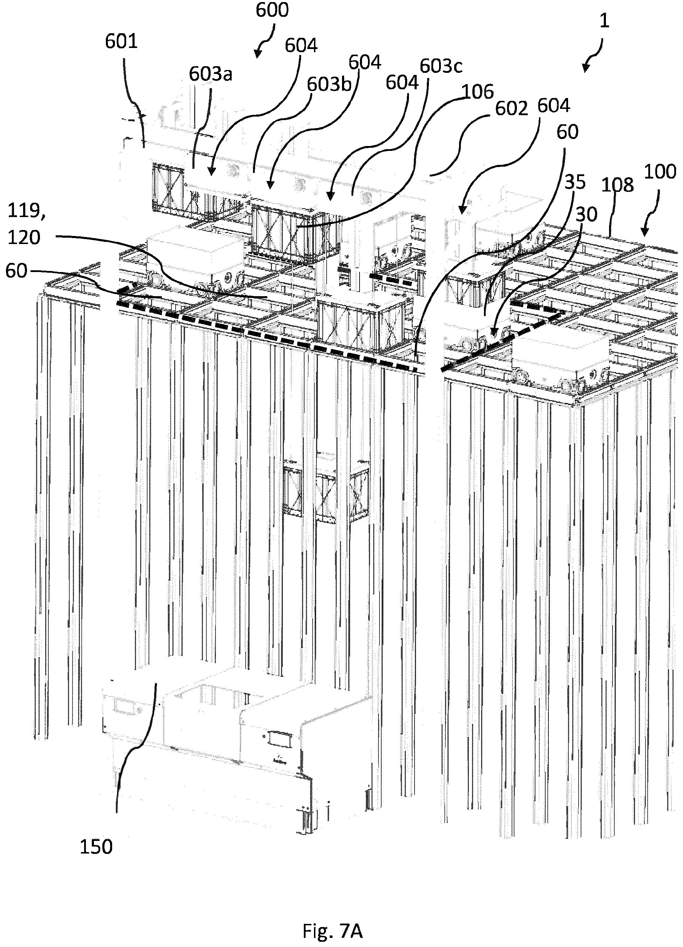

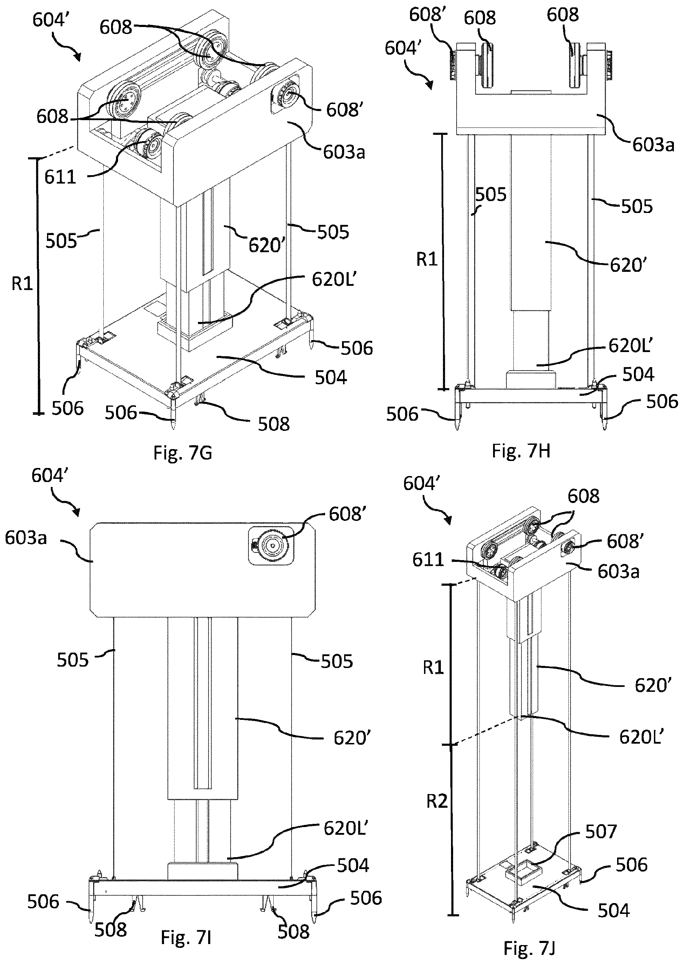

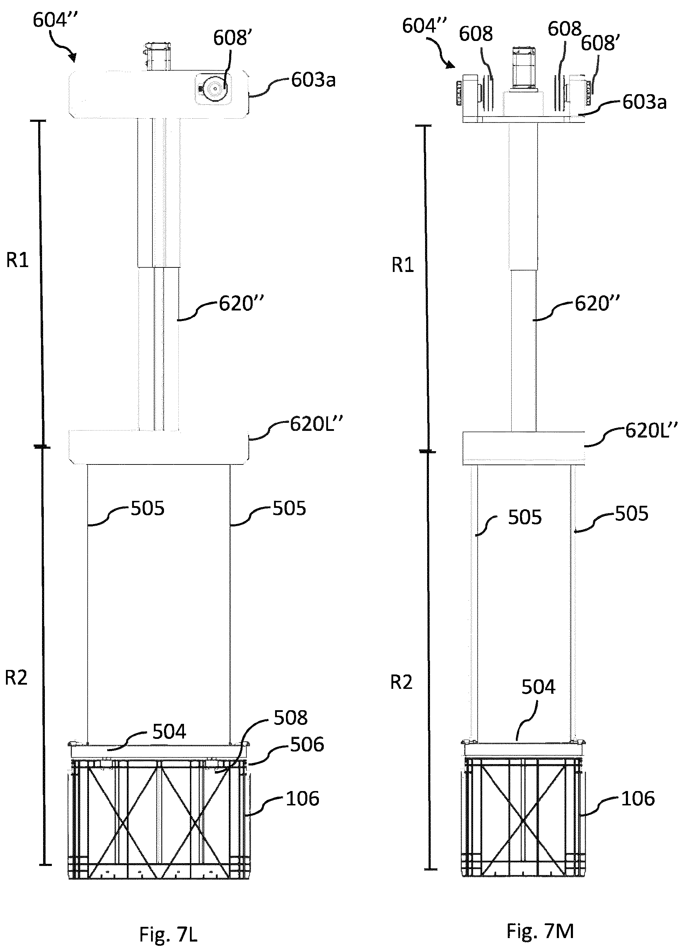

Fig. 7A is a side perspective view of a gantry arrangement 600 at a port area 50 of an automated storage and retrieval system 1. An access station 150 is arranged below the port columns 119,120. The gantry arrangement 600 comprises a first cross-member 601, a crane trolley assembly 604 comprising a first crane trolley 603a suspended from the first cross-member 601 and a first lifting frame 504 suspended by lifting bands 505 from the crane trolley 603a. Two additional crane trolleys, including a second crane trolley 603b and a third crane trolley 603c are suspended from the first cross member 601. The gantry arrangement 600 is further disclosed with a second cross-member 602 which is parallel to the first cross-member 601. Two crane trolleys, including a fourth crane trolley 603d and a fifth crane trolley 605e, are suspended from the second cross-member 602.

The port (i.e. the access station 150) can be arranged at a lower part of the port column 119,120 and the lifting frame 504 of the crane trolley assembly 604 can be raised and lowered between a docked position at the crane trolley 603a and the port.

It is further disclosed details of the first type of container handling vehicle 30. The first type of container handling vehicle 30 is disclosed as a delivery vehicle 30 with a container carrier 35 for supporting a storage container 106. The container carrier 35 is configured to receive a storage container 106 from above.

The lifting frames 504 of the crane trolley assemblies 604 in the gantry arrangement 600 are raisable at a level above an uppermost part of a storage container 106 carried by the container carrier 35 of the first type of container handling vehicle 30 and is configured to transfer a storage container (106) between the container carrier 35 and the port column 119,120.

The gantry arrangement 600 is arranged in a fixed position within the port area 50 and at a fixed position above the port columns 119,120.

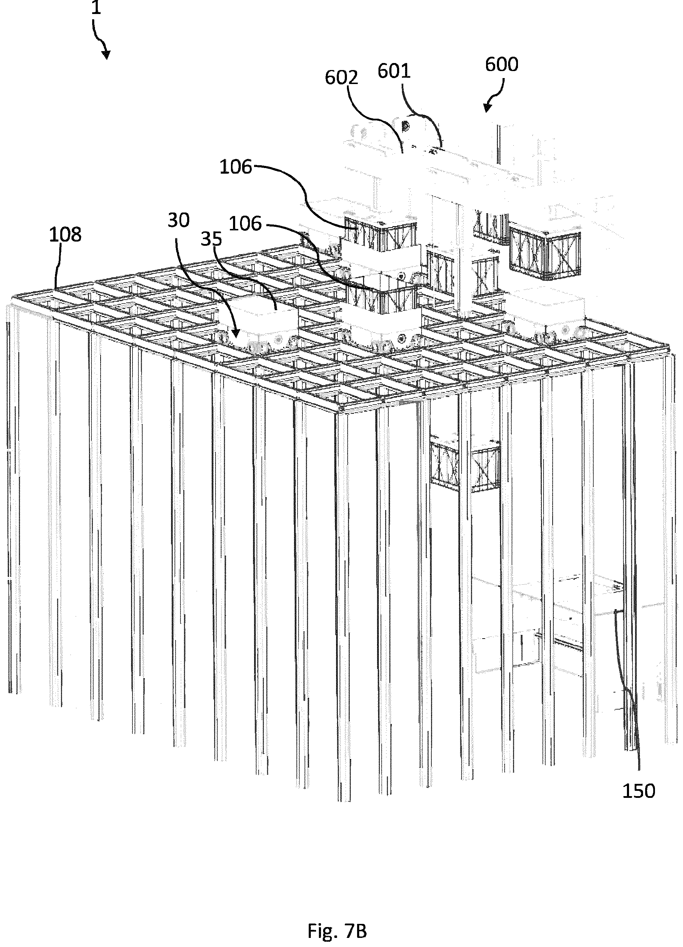

Fig. 7B is a side perspective view of the gantry arrangement in Fig. 7A seen from the other side.

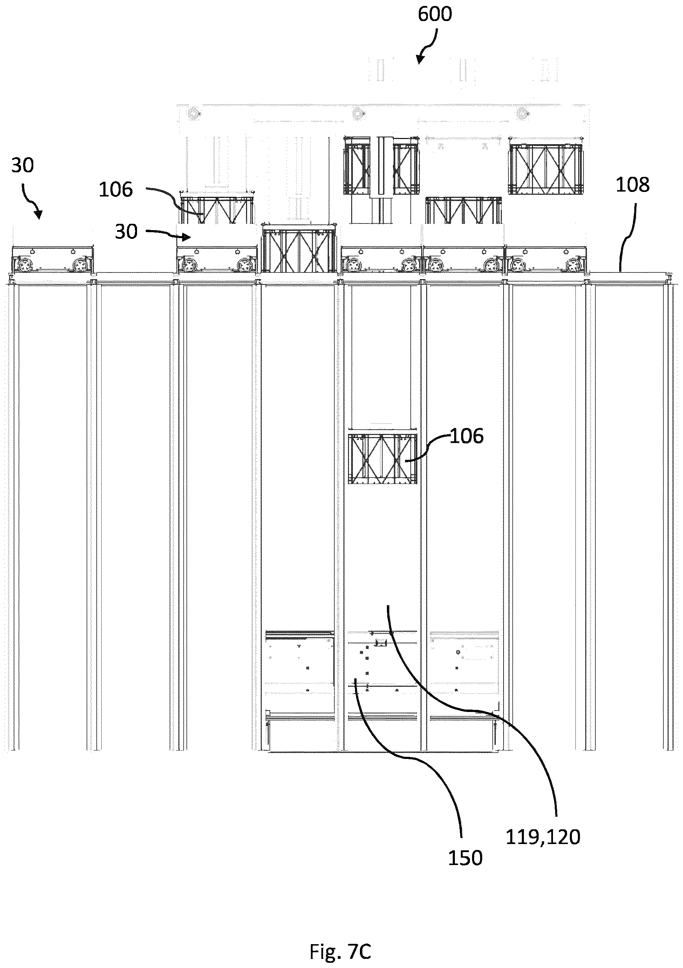

Fig. 7C is a side view of the gantry arrangement in Figs. 7A and 7B.

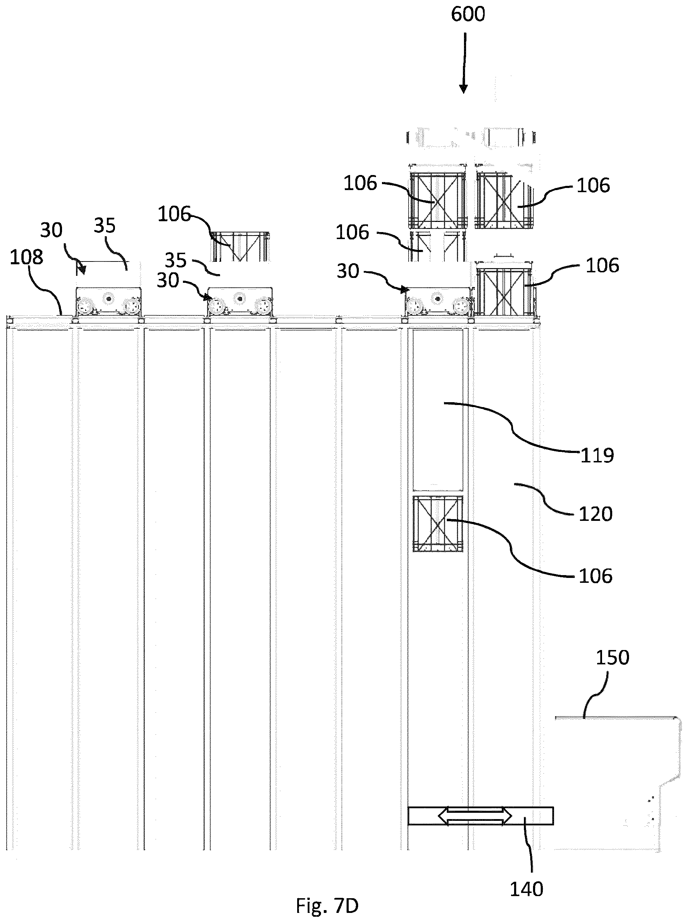

Fig. 7D is another side view of the gantry arrangement in Figs. 7A, 7B and 7C, seen from a perpendicular angle relative the view in Fig. 7C. A conveyor system comprising a conveyor 140 is employed at a lower part of the port columns 119,120 to transport storage containers 106 between the port columns 119,120 and the access station 150.

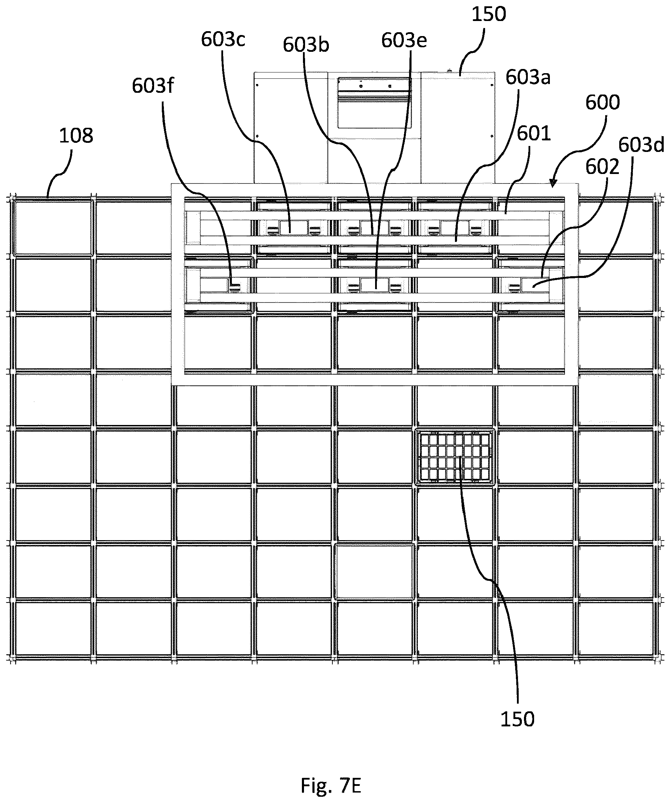

Fig. 7E is a top view of the gantry arrangement in Figs. 7A, 7B, 7C and 7D.

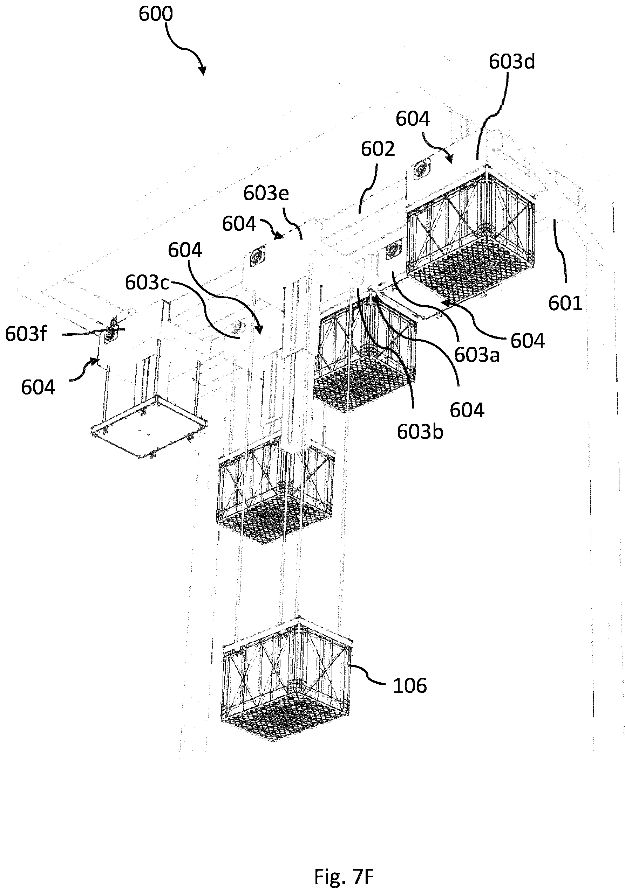

Fig. 7F is a side perspective view from below of the gantry arrangement in Figs. 7A, 7B, 7C, 7D and 7E.

Figs.7G-7J are different views of a crane trolley assembly 604' according to a first embodiment with a stabilizer 620' for stabilizing a lifting frame 504 suspended from lifting bands 505 within a first vertical movement range R1 and a second vertical movement range R2. The crane trolley 603a is configured for guided movement along a beam 601,602 (not shown in Figs. 7G-7J, see for example Fig 7A) of a crane 600 (not shown in Figs. 7G-7J, see for example Fig. 7A) and features a lifting frame 504 configured for connection to a storage container 106 (storage container not shown in Figs. 7G-7J, see for example Fig. 7A) to lift the storage container 106 from above through the first vertical movement range R1 and the second vertical movement range R2 of the lifting frame 504.

The crane trolley assembly 604' features a plurality of lifting bands 505 suspending the lifting frame 504 below the crane trolley 603a for lifting and lowering the lifting frame 504 through at least the second vertical movement range R2 and a stabilizer 620' extending below the crane trolley 603a. A lower end 620L' of the stabilizer 620' is configured to interact with the lifting frame 504 in order to stabilize the lifting frame 504 during the first vertical movement range R1 of the lifting frame 504. The stabilizer 620' and the lifting frame 504 are configured to move vertically relative each other when in the second vertical movement range R2 of the lifting frame 504. The distance between the stabilizer 620' and the lifting frame 504 increases when the lifting frame 504 continues to move vertically below a reach of the lower end 620L' of the stabilizer 620'.

The stabilizer 620' is configured to stabilize the lifting and lowering of the lifting frame 504 by guiding movement of the lifting frame 504 in a vertical direction below the crane trolley 603a while restricting horizontal movement of the lifting frame 504 during the first vertical movement range R1 of the lifting frame 504 when the lower end 620L' of the stabilizer 620' interacts with lifting frame 504. The lifting frame 504 is provided with a socket 507 to locate the lower end 620L' of the stabilizer 620', whereby sides of the socket 507 engaging with the lower end 620L' of the stabilizer restrict horizontal movement of the lifting frame 504 during the first vertical movement range R1.

Dependent on the use of the crane trolley assembly, the stabilizer 620' may have a maximum reach which is shorter than the maximum reach of the lifting bands 505.

The first and second vertical movement ranges R1,R2 are subsequent movement ranges, i.e. the second vertical movement range R2 succeeds the first vertical movement range R1, and vice versa. In other words, the first and second vertical movement range R1,R2 do not overlap each other. The first vertical movement range is closer to the crane trolley relative the second vertical movement range R2.

The lifting frame 504 is preferably rectangular and comprises guides 506 at its corners for guiding the lifting frame 504 within storage columns 105 (not shown in Figs. 7G-7J, but see e.g. Fig. 7A) of a frame structure 100 (not shown in Figs. 7G-7J, but see e.g. Fig. 7A) of an automated storage and retrieval system 1 during the second vertical movement range R2. The guides 506 assist in aligning the grippers 508 relative the gripping recesses of the storage container 106.

The crane trolley 603a is disclosed with a first lateral movement arrangement 608 for movement along the first beam 601 and/or the second beam 602. The lateral movement arrangement 608 is shown as being in the form of wheels 608 which are driven by a wheel motor 608'. The crane trolley 603a is thus be movable in a horizontal plane along the first beam 601 and/or the second beam 602. Similarly, the first and or second beam 601,602 may comprise a second lateral movement arrangement (not shown) for movement in a perpendicular direction within the same horizontal plane.

The stabilizer 620' comprises an extendable mechanism for moving the lower end 620L' relative the crane trolley 603a. The extendable mechanism of the stabilizer 620' in Figs. 7G-7J is shown as a telescopic mechanism. The stabilizer 620' is arranged between the lifting bands 505.

The plurality of lifting bands 505 are arranged to wind onto and off spools 611. The spools 611 are positioned at the crane trolley 603a.

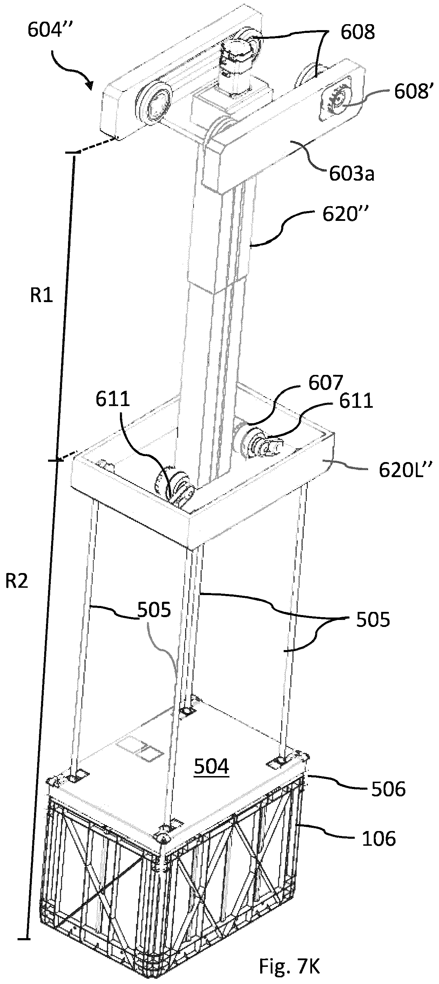

Figs. 7K-7M are different views of a crane trolley assembly 604" according to a second embodiment comprising a stabilizer 620" for stabilizing a lifting frame 504 suspended from lifting bands 505 from a lower end 620L" of the stabilizer 620", wherein the lifting frame 504 is stabilized by the stabilizer 620" when within a first vertical movement range R1, where Fig. 7K is a perspective view where the lifting frame 504 is within a second vertical movement range R2 below the first vertical movement range R1, Fig. 7L is a side view of Fig. 7K from a first angle and Fig. 7L is a side view of Fig. 7K from a second angle.

The crane trolley 603a is configured for guided movement along a beam 601,602 (not shown in Figs. 7K-7M, see for example Fig. 7A) of a crane 600 (not shown in Figs. 7K-7M, see for example Fig. 7A) and features a lifting frame 504 configured for connection to a storage container 106 (storage container not shown in Figs. 7K-7M, see for example Fig. 7A) to lift the storage container 106 from above through the first vertical movement range R1 and the second vertical movement range R2 of the lifting frame 504.

The crane trolley assembly 604" features a plurality of lifting bands 505 suspending the lifting frame 504 below the crane trolley 603a for lifting and lowering the lifting frame 504 through at least the second vertical movement range R2 and a stabilizer 620" extending below the crane trolley 603a. A lower end 620L" of the stabilizer 620' is configured to interact with the lifting frame 504 in order to stabilize the lifting frame 504 during the first vertical movement range R1 of the lifting frame 504. The stabilizer 620" and the lifting frame 504 are configured to move vertically relative each other when in the second vertical movement range R2 of the lifting frame 504. The distance between the stabilizer 620" and the lifting frame 504 increases when the lifting frame 504 continues to move vertically below a reach of the lower end 620L" of the stabilizer 620".

The stabilizer 620" is configured to stabilize the lifting and lowering of the lifting frame 504 by guiding movement of the lifting frame 504 in a vertical direction below the crane trolley 603a while restricting horizontal movement of the lifting frame 504 during the first vertical movement range R1 of the lifting frame 504 when the lower end 620L'' of the stabilizer 620" interacts with lifting frame 504. The lower end 620L" of the stabilizer 620" is fixedly connected to the stabilizer 620", i.e. the lower end 620L" of the stabilizer 620" moves together with the stabilizer 620".

Dependent on the use of the crane trolley assembly, the stabilizer 620" may have a maximum reach which is shorter than the maximum reach of the lifting bands 505.

The first and second vertical movement ranges R1,R2 are subsequent movement ranges, i.e. the second vertical movement range R2 succeeds the first vertical movement range R1, and vice versa. In other words, the first and second vertical movement range R1,R2 do not overlap each other. The first vertical movement range is closer to the crane trolley relative the second vertical movement range R2.

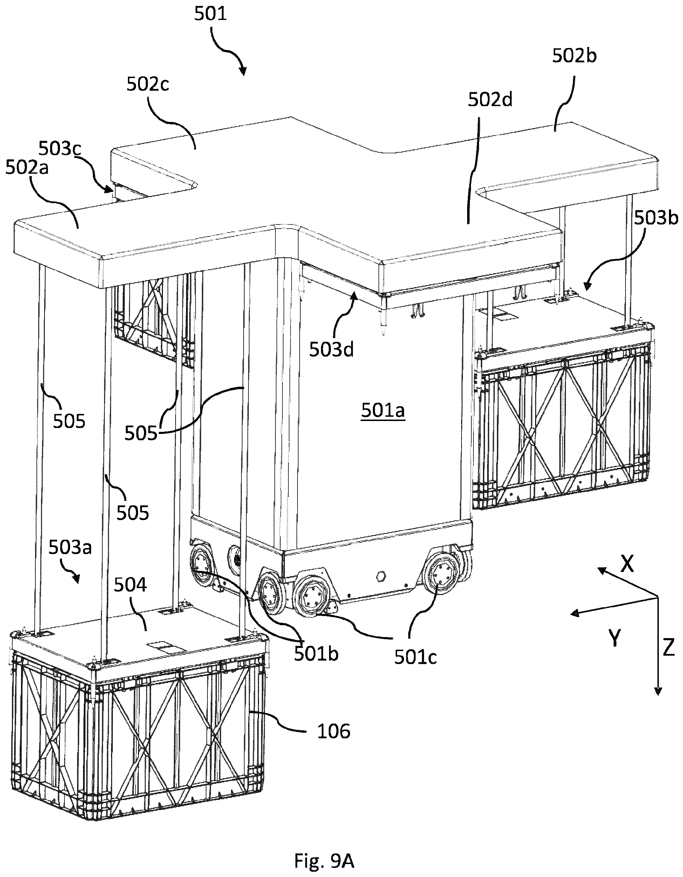

The lifting frame 504 is preferably rectangular and comprises guides 506 at its corners for guiding the lifting frame 504 within storage columns 105 (not shown in Figs. 7K-7M, but see e.g. Fig. 9A) of a frame structure 100 (not shown in Figs. 7K-7M, but see e.g. Fig. 9A) of an automated storage and retrieval system 1 during the second vertical movement range R2. The guides 506 assist in aligning the grippers 508 relative the gripping recesses of the storage container 106 (see details of the guides 506 and grippers 508 e.g. in Fig. 7G).

The crane trolley 603a is disclosed with a first lateral movement arrangement 608 for movement along the first beam 601 and/or the second beam 602. The lateral movement arrangement 608 is shown as being in the form of wheels 608 which are driven by a wheel motor 608'. The crane trolley 603a is thus be movable in a horizontal plane along the first beam 601 and/or the second beam 602. Similarly, the first and or second beam 601,602 may comprise a second lateral movement arrangement (not shown) for movement in a perpendicular direction within the same horizontal plane.

The stabilizer 620'' comprises an extendable mechanism for moving the lower end 620L'' relative the crane trolley 603a. The extendable mechanism of the stabilizer 620" in Figs. 7K-7M is shown as a stabilizer 620" which can run through the crane trolley 603a.

The plurality of lifting bands 505 are arranged to wind onto and off spools 611. The spools 611 are positioned at the lower end 620L" of the stabilizer 620". A lifting device motor 607 is also arranged at the lower end 620L" of the stabilizer 620".

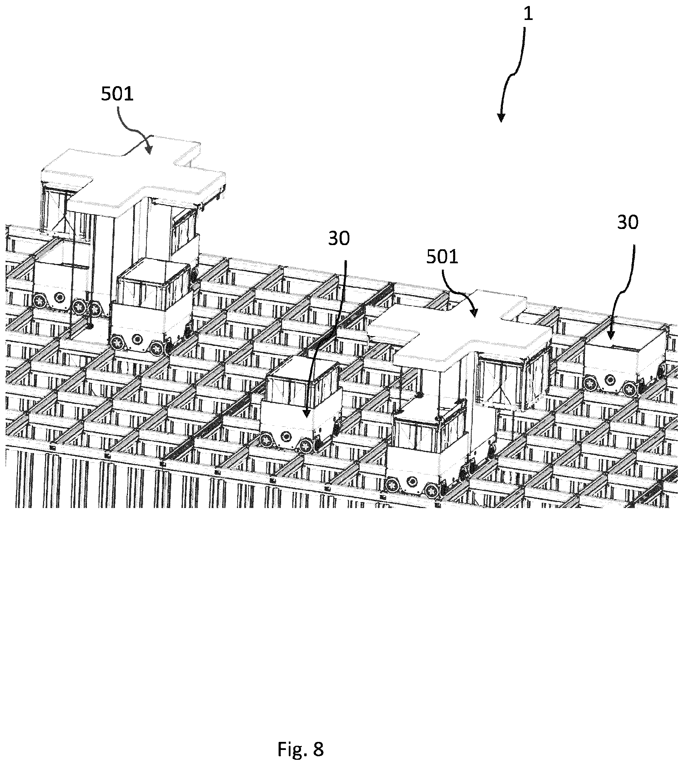

Fig. 8 is a side perspective view of a part of a storage and retrieval system 1 showing a number of the first type of container handling vehicles 30 cooperating with two cranes 501.

Fig. 9A is a side perspective view of an exemplary crane 501 with four lifting devices 503a,503b,503c,503d. Each of the lifting devices 503a,503b,503c,503d are suspended from a respective cantilever section 502a,502b,502c,502d and comprises a lifting frame 504 suspended from lifting bands 505.

As disclosed, the crane 501 features a first cantilever section 502a. The first lifting device 503a is suspended from the first cantilever section 502a. Furthermore, the crane 501 features a second cantilever section 502b on an opposite side of the vehicle body 501 of the crane 501 compared to the first cantilever section 502a. The second lifting device 503b is suspended from the second cantilever section 502b. As such, the crane 501 is configured to pick storage containers 106 from two different stacks 107 on different sides of the crane 501.

The crane 501 further features a third cantilever section 502c arranged perpendicular to the first cantilever section 502a and the second cantilever section 502b, and a third lifting device 503c suspended from the third cantilever section 502c; and a fourth cantilever section 502d arranged perpendicular to the first cantilever section 502a and the second cantilever section 502b on an opposite side of the body 501a compared to the third cantilever section 502c, and a fourth lifting device 503d suspended from the fourth cantilever section 502d.

When seen from above, the crane 501 has a cross-shaped cross-section. The cantilever sections 502a,502b,502c,502d are arranged in the same horizontal plane.

The cranes 501 are shown as a second type of container handling vehicle 501 operating on the rail system 108. The second type of container handling vehicle 501 comprising a first set of wheels 501b for movement on the rail system 108 in the first direction X and a second set of wheels 501c for movement on the rail system 108 in the second direction Y.

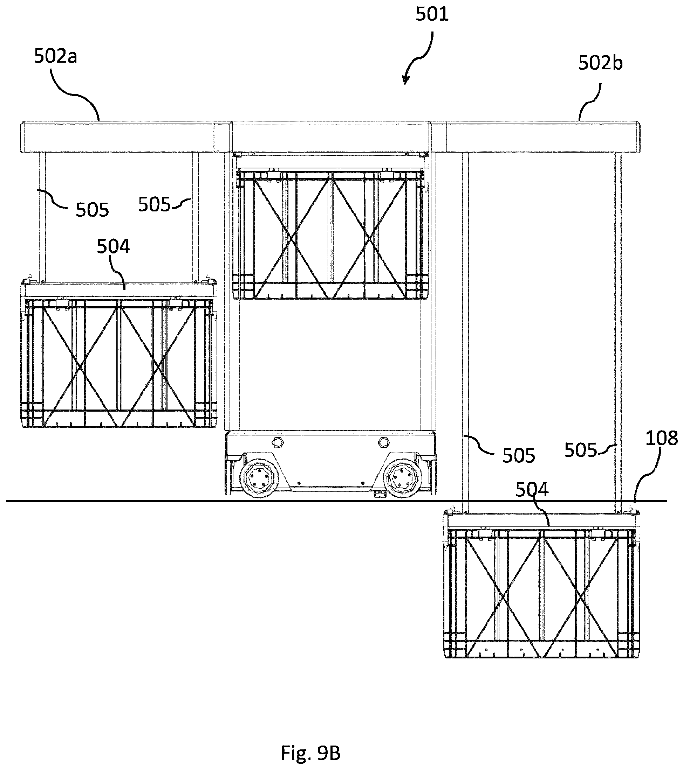

Fig. 9B is a side view of the crane in Fig. 9A. As illustrated in the Figure, the lifting frame 504 suspended from lifting device 503b extends down below the rail system 108 in order to show that the lifting frames 504 can retrieve storage containers 106 stored in stacks below the rail system 108.

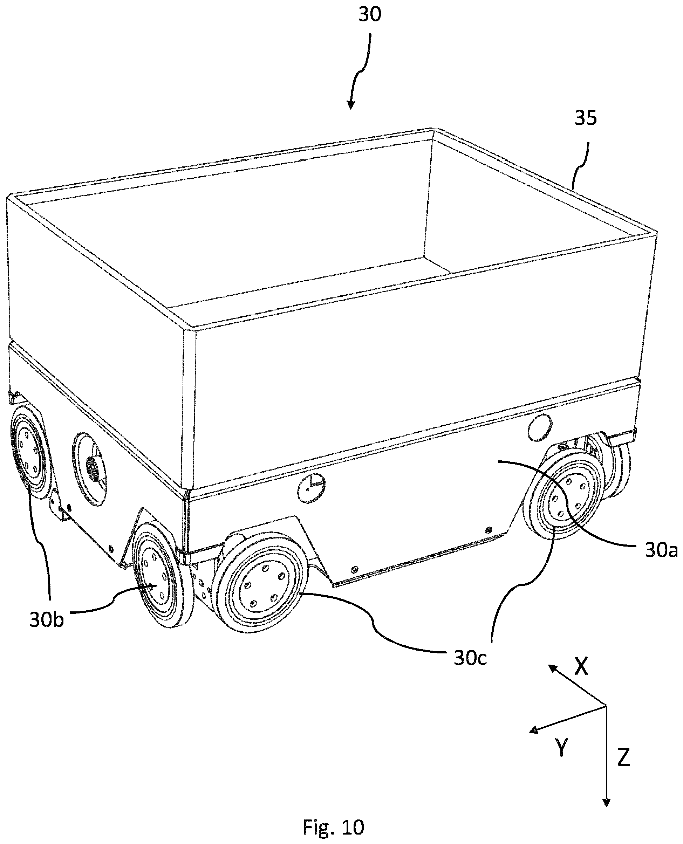

Fig. 10 is a side perspective view of an example first type of container handling vehicle 30. As discussed in relation to Fig. 7A, the first type of container handling vehicle 30 is in the form of delivery vehicle 30 with a container carrier 35 for supporting a storage container 106. The container carrier 35 is configured to receive a storage container 106 from above. The delivery vehicle 30 comprises a vehicle body 30a. A first set of wheels 30b for movement on the rail system 108 in the first direction X as well as a second set of wheels 30c for movement on the rail system 108 in the second direction Y are mounted on the vehicle body of the delivery vehicle 30a.

With reference to Figs. 6-10, a method of transferring a storage container 106 from a storage position in a stack 107 of storage containers to a port area 50 of a rail system 108 of an automated storage and retrieval system 1 will be described. The method comprises the steps of:
- using the first lifting device 503a of the crane 501 to pick up a storage container 106 from the stack 107 and raising the first lifting device 503a in a raised position with the storage container 106;
- positioning the container carrier 35 of the first type of container handling vehicle 30 directly below the raised first lifting device 503a;
- lowering the first lifting device 503a with the storage container 106 to lower the storage container 106 onto the container carrier 35 of the first type of container handling vehicle 30;
- moving the first type of container handling vehicle 30 with the storage container 106 to the gantry arrangement 600 at the port area 50 of the rail system 108;
- either a) moving the first type of container handling vehicle 30 such that the container carrier 35 is directly below the first crane trolley assembly 604 of the gantry arrangement 600 or b) positioning the first crane trolley assembly 604 of the gantry arrangement 600 directly above the container carrier 35 of the first type of container handling vehicle 30; and
- picking up the storage container 106 from the container carrier 35 using the first lifting frame 504.

The method may further comprise the step of lowering the storage container 106 through the port column 119, 120 to the lower end of the port column 119,120. An access station 150 may preferably be arranged below and/or close to the lower end of the port column 119,120.

The storage containers 106 can be arranged in a stack 107 of storage containers at the port area 50.

In the event of e.g. "hot items", i.e. items stored in storage containers 106 which are frequently used, such storage containers 106 can be arranged in a stack 107 of storage containers 106 within the port area 50 or they may be temporary stored in any of the crane trolley assemblies 604 of the gantry arrangement 600.

In the preceding description, various aspects of the independent claims have been described. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention as defined in the attached claims.

**List of reference numbers**

| | |
|---|---|
| 1 | Prior art automated storage and retrieval system |
| 30 | Delivery vehicle / First type of container handling vehicle |
| 30a | Vehicle body delivery vehicle 30 |
| 30b | Drive means / wheel arrangement / first set of wheels in first direction (*X*) |
| 30c | Drive means / wheel arrangement / second set of wheels in second direction (*Y*) |
| 35 | Container carrier |
| 50 | Port area |
| 60 | Buffer stack of storage containers |
| 100 | Frame structure |
| 102 | Upright member |
| 104 | Storage volume |
| 105 | Storage column |
| 106 | Storage container |
| 106' | Particular position of storage container |
| 107 | Stack |
| 108 | Rail system |
| 110 | First set of parallel rails (in first direction (*X*)) |
| 111 | Second set of parallel rails (in second direction (*Y*)) |
| 112 | Access opening |
| 119 | Port column |
| 120 | Port column |
| 130 | Grid cell |
| 140 | Conveyor / Conveyor system |
| 150 | Access station |
| 201 | Prior art container handling vehicle |
| 201a | Vehicle body of the container handling vehicle 201 |
| 201b | Drive means / wheel arrangement / first set of wheels in first direction (*X*) |
| 201c | Drive means / wheel arrangement / second set of wheels in second direction (*Y*) |
| 301 | Prior art cantilever container handling vehicle |
| 301a | Vehicle body of the container handling vehicle 301 |
| 301b | Drive means / first set of wheels in first direction (*X*) |
| 301c | Drive means / second set of wheels in second direction (*Y*) |
| 401 | Prior art container handling vehicle |
| 401a | Vehicle body of the container handling vehicle 401 |
| 401b | Drive means / first set of wheels in first direction (*X*) |
| 401c | Drive means / second set of wheels in second direction (*Y*) |
| 404 | Gripping device |
| 404a | Lifting band |
| 404b | Gripper |
| 404c | Guide pin |
| 404d | Lifting frame |
| 500 | Control system |
| 501 | Crane / Second type of container handling vehicle |
| 501a | Vehicle body of container handling vehicle 501 |
| 501b | Drive means / first set of wheels in first direction (*X*) |
| 501c | Drive means / second set of wheels in second direction (*Y*) |
| 502a | First cantilever section |
| 502b | Second cantilever section |
| 502c | Third cantilever section |
| 502d | Fourth cantilever section |
| 503a | First lifting device of container handling vehicle 501 |
| 503b | Second lifting device of container handling vehicle 501 |
| 503c | Third lifting device of container handling vehicle 501 |
| 503d | Fourth lifting device of container handling vehicle 501 |
| 504 | Lifting frame |
| 505 | Lifting bands |
| 506 | Guide |
| 507 | Socket |
| 508 | Gripper |
| 600 | Gantry arrangement |
| 601 | First beam / First cross-member |
| 602 | Second beam / Second cross-member |
| 603a | First crane trolley |
| 603b | Second crane trolley |
| 603c | Third crane trolley |
| 603d | Fourth crane trolley |
| 603e | Fifth crane trolley |
| 603f | Sixth crane trolley |
| 604' ,604" ,604‴ | Crane trolley assembly |
| 607 | Lifting device motor |
| 608 | First lateral movement arrangement, wheels |
| 608' | Wheel motor |
| 611 | Spool |
| 620' | Stabilizer, first embodiment |
| 620" | Stabilizer, second embodiment |
| 620L' | Lower end of stabilizer, first embodiment |
| 620L'' | Lower end of stabilizer, second embodiment |
| R1 | First vertical movement range |
| R2 | Second vertical movement range |
| | |
| X | First direction |
| *Y* | Second direction |
| *Z* | Third direction |

## Claims

1. An automated storage and retrieval system (1) comprising a two-dimensional rail system (108) comprising a first set of parallel rails (110) in a horizontal plane arranged to guide movement of container handling vehicles (201,301,401,501) in a first direction (X) across the top of a frame structure (100), and a second set of parallel rails (111) in the horizontal plane arranged perpendicular to the first set of parallel rails (110) to guide movement of the container handling vehicles (201,301,401,501) in a second direction (Y) which is perpendicular to the first direction (X), the frame structure (100) defining a plurality of storage columns (105) for accommodating vertical stacks of storage containers (106),
wherein the automated storage and retrieval system (1) comprises:
- a first type of container handling vehicle (30) operating on the rail system (108), the first type of container handling vehicle (30) comprises a first set of wheels (30b) for movement on the rail system (108) in the first direction (X) and a second set of wheels (30c) for movement on the rail system (108) in the second direction (Y), and a container carrier (35) for supporting a storage container (106), the container carrier (35) being configured to receive a storage container (106) from above;
- a crane (501) comprising a first lifting device (503a) comprising a first lifting frame (504) suspended from lifting bands (505), wherein the first lifting frame (504) is raisable at a level above an uppermost part of a storage container (106) carried by the container carrier (35) of the first type of container handling vehicle (30) and is configured to transfer a storage container (106) stored in a stack of storage containers (107) to the container carrier (35) of the first type of container handling vehicle (30);
**characterized in that**, the automated storage and retrieval system further comprises
- a port column (119,120) through which a storage container (106) may be transferred between an upper end and a lower end of the port column (119,120); and
- a gantry arrangement (600) arranged at a port area (50) of the rail system (108), at which port area (50) the upper ends of the port columns (119,120) are arranged, wherein the gantry arrangement (600) comprises a first cross-member (601), a crane trolley assembly (604) comprising a first crane trolley (603a) suspended from the first cross-member (601) and a first lifting frame (504) suspended by lifting bands (505) from the crane trolley (603a), wherein the lifting frame (504) is raisable at a level above an uppermost part of a storage container (106) carried by the container carrier (35) of the first type of container handling vehicle (30) and is configured to transfer a storage container (106) between the container carrier (35) and the port column (119,120).

2. The automated storage and retrieval system according to claim 1, wherein the crane (501) is a second type of container handling vehicle (501) operating on the rail system (108) and comprising a first set of wheels (501b) for movement on the rail system (108) in the first direction (X) and a second set of wheels (501c) for movement on the rail system (108) in the second direction (Y).

3. The automated storage and retrieval system (1) according to claim 1 or 2, wherein the gantry arrangement (600) is in a fixed position over the port area (50).

4. The automated storage and retrieval system (1) according to any of the preceding claims 1-3, wherein the crane (501) comprises a first cantilever section (502a) and wherein the first lifting device (503a) is suspended from the first cantilever section (502a), and optionally wherein crane (501) is configured to pick storage containers (106) from two different stacks (107) on different sides of the crane (501).

5. The automated storage and retrieval system (1) according to claim 4, wherein the crane (501) comprises a second cantilever section (502b) and a second lifting device (503b), wherein the second cantilever section (502b) is arranged on an opposite part of a body (501a) of the crane (501) relative the first cantilever section (502a), and wherein the second lifting device (503b) is suspended from the second cantilever section (502b).

6. The automated storage and retrieval system (1) according to claim 5, wherein the second lifting device (503b) is configured for simultaneous operation with the first lifting device (503a).

7. The automated storage and retrieval system (1) according to claim 5 or 6, wherein the crane (501) comprises:
- a third cantilever section (502c) arranged perpendicular to the first cantilever section (502a) and the second cantilever section (502b), and a third lifting device (503c) suspended from the third cantilever section (502c); and
- a fourth cantilever section (502d) arranged perpendicular to the first cantilever section (502a) and the second cantilever section (502b) on an opposite side of the body (501a) compared to the third cantilever section (502c), and a fourth lifting device (503d) suspended from the fourth cantilever section (502d).

8. The automated storage and retrieval system (1) according to any of the preceding claims, wherein the first crane trolley (603a) is movable along the first cross-member (601), and optionally wherein the crane trolley (603a) is movable between a position where it can transfer a storage container (106) to and from the port column (119,120) and a position where it can transfer a storage container (106) to and from a buffer stack (60) of storage containers (106).

9. The automated storage and retrieval system (1) according to any of the preceding claims, wherein the gantry arrangement (600) comprises a second crane trolley assembly (604) comprising a second crane trolley (603b) suspended from the first cross-member (601).

10. The automated storage and retrieval system (1) according to any of the preceding claims, wherein the gantry arrangement (600) comprises a second cross-member (602) parallel to the first cross-member (601), and a crane trolley assembly (604) comprising a crane trolley (603d,603e,603f) is suspended from the second cross-member (602).

11. The automated storage and retrieval system (1) according to any of the preceding claims 9-10, wherein the lifting frames (504) are raisable at a level above an uppermost part of a storage container (106) carried by the container carrier (35) of the first type of container handling vehicle (30) and are configured to transfer a storage container (106) between the container carrier (35) and the port column (119,120).

12. A method of transferring a storage container (106) from a storage position in a stack (107) of storage containers to a port area (50) of a rail system (108) of an automated storage and retrieval system (1) according to any of the preceding claims 1-11, wherein the method comprises the steps of:
- using the first lifting device (503a) of the crane (501) to pick up a storage container (106) from the stack (107) and raising the first lifting device (503a) in a raised position with the storage container (106);
- positioning the container carrier (35) of the first type of container handling vehicle (30) directly below the raised first lifting device (503a);
- lowering the first lifting device (503a) with the storage container (106) to lower the storage container onto the container carrier (35) of the first type of container handling vehicle (30);
- moving the first type of container handling vehicle (30) with the storage container (106) to the gantry arrangement (600) at the port area (50) of the rail system (108);
- either a) moving the first type of container handling vehicle (30) such that the container carrier (35) is) directly below the crane trolley assembly (604) of the gantry arrangement (600) or b) positioning the crane trolley assembly (604) of the gantry arrangement (600) directly above the container carrier (35) of the first type of container handling vehicle (30); and
- picking up the storage container (106) from the container carrier (35) using the first lifting frame (504) of the crane trolley assembly (604).

13. The method according to claim 12, comprising the step of lowering the storage container (106) through the port column (119, 120) to the lower end of the port column (119,120).

14. The method according to claim 12 or 13, comprising the step of positioning the storage container (106) in a stack of storage containers at the port area (50).

15. The method according to claim 12, 13, or 14, comprising the step of temporary storing the storage container (106) at the crane trolley assembly (604) of the gantry arrangement (600).

## Patentansprüche

1. Automatisiertes Lager- und Entnahmesystem (1), das ein zweidimensionales Schienensystem (108) umfasst, das einen ersten Satz paralleler Schienen (110) in einer horizontalen Ebene, die derart angeordnet sind, dass sie eine Bewegung von Behälterhandhabungsfahrzeugen (201, 301, 401, 501) in einer ersten Richtung (X) über die Oberseite einer Rahmenstruktur (100) hinweg führen, und einen zweiten Satz paralleler Schienen (111) in der horizontalen Ebene, die senkrecht zu dem ersten Satz paralleler Schienen (110) angeordnet sind, um eine Bewegung der Behälterhandhabungsfahrzeuge (201, 301, 401, 501) in einer zweiten Richtung (Y), die senkrecht zu der ersten Richtung (X) ist, zu führen, umfasst, wobei die Rahmenstruktur (100) eine Vielzahl von Lagersäulen (105) zum Unterbringen vertikaler Stapel von Lagerbehältern (106) definiert,
wobei das automatisierte Lager- und Entnahmesystem (1) Folgendes umfasst:
- einen ersten Typ eines Behälterhandhabungsfahrzeugs (30), das auf dem Schienensystem (108) betrieben wird, wobei der erste Typ eines Behälterhandhabungsfahrzeugs (30) einen ersten Satz Räder (30b) zur Bewegung auf dem Schienensystem (108) in der ersten Richtung (X) und einen zweiten Satz Räder (30c) zur Bewegung auf dem Schienensystem (108) in der zweiten Richtung (Y) umfasst, und einen Behälterträger (35) zum Tragen eines Lagerbehälters (106), wobei der Behälterträger (35) dazu ausgelegt ist, einen Lagerbehälter (106) von oben aufzunehmen;
- einen Kran (501), der eine erste Hebevorrichtung (503a) umfasst, die einen ersten Heberahmen (504) umfasst, der an Hebebändern (505) aufgehängt ist, wobei der erste Heberahmen (504) auf einer Höhe über einem obersten Teil eines Lagerbehälters (106), der von dem Behälterträger (35) des ersten Typs eines Behälterhandhabungsfahrzeugs (30) getragen wird, anhebbar und dazu ausgelegt ist, einen Lagerbehälter (106), der in einem Stapel von Lagerbehältern (107) gelagert ist, an den Behälterträger (35) des ersten Typs eines Behälterhandhabungsfahrzeugs (30) zu übergeben;
**dadurch gekennzeichnet, dass** das automatisierte Lager-und Entnahmesystem ferner Folgendes umfasst:
- eine Portsäule (119, 120), durch die ein Lagerbehälter (106) zwischen einem oberen Ende und einem unteren Ende der Portsäule (119, 120) übergeben werden kann; und
- eine Portalanordnung (600), die an einem Portbereich (50) des Schienensystems (108) angeordnet ist, wobei an dem Portbereich (50) die oberen Enden der Portsäulen (119, 120) angeordnet sind, wobei die Portalanordnung (600) einen ersten Querträger (601), eine Kranlaufkatzenbaugruppe (604), die eine erste Kranlaufkatze (603a) umfasst, die an dem ersten Querträger (601) aufgehängt ist, und einen ersten Heberahmen (504), der durch Hebebänder (505) an der Kranlaufkatze (603a) aufgehängt ist, umfasst,
wobei der Heberahmen (504) auf einer Höhe über einem obersten Teil eines Lagerbehälters (106), der von dem Behälterträger (35) des ersten Typs eines Behälterhandhabungsfahrzeugs (30) getragen wird, anhebbar und dazu ausgelegt ist, einen Lagerbehälter (106) zwischen dem Behälterträger (35) und der Portsäule (119, 120) zu übergeben.

2. Automatisiertes Lager- und Entnahmesystem nach Anspruch 1, wobei der Kran (501) ein zweiter Typ eines Behälterhandhabungsfahrzeugs (501) ist, das auf dem Schienensystem (108) betrieben wird und einen ersten Satz Räder (501b) zur Bewegung auf dem Schienensystem (108) in der ersten Richtung (X) und einen zweiten Satz Räder (501c) zur Bewegung auf dem Schienensystem (108) in der zweiten Richtung (Y) umfasst.

3. Automatisiertes Lager- und Entnahmesystem (1) nach Anspruch 1 oder 2, wobei sich die Portalanordnung (600) in einer festen Position über dem Portbereich (50) befindet.

4. Automatisiertes Lager- und Entnahmesystem (1) nach einem der vorhergehenden Ansprüche 1-3, wobei der Kran (501) einen ersten Auslegerabschnitt (502a) umfasst und wobei die erste Hebevorrichtung (503a) an dem ersten Auslegerabschnitt (502a) aufgehängt ist und wobei der Kran (501) optional dazu ausgelegt ist, Lagerbehälter (106) von zwei verschiedenen Stapeln (107) auf verschiedenen Seiten des Krans (501) zu greifen.

5. Automatisiertes Lager- und Entnahmesystem (1) nach Anspruch 4, wobei der Kran (501) einen zweiten Auslegerabschnitt (502b) und eine zweite Hebevorrichtung (503b) umfasst, wobei der zweite Auslegerabschnitt (502b) auf einem gegenüberliegenden Teil eines Körpers (501a) des Krans (501) relativ zu dem ersten Auslegerabschnitt (502a) angeordnet ist und wobei die zweite Hebevorrichtung (503b) an dem zweiten Auslegerabschnitt (502b) aufgehängt ist.

6. Automatisiertes Lager- und Entnahmesystem (1) nach Anspruch 5, wobei die zweite Hebevorrichtung (503b) für einen gleichzeitigen Betrieb mit der ersten Hebevorrichtung (503a) ausgelegt ist.

7. Automatisiertes Lager- und Entnahmesystem (1) nach Anspruch 5 oder 6, wobei der Kran (501) Folgendes umfasst:
- einen dritten Auslegerabschnitt (502c), der senkrecht zu dem ersten Auslegerabschnitt (502a) und dem zweiten Auslegerabschnitt (502b) angeordnet ist, und eine dritte Hebevorrichtung (503c), die an dem dritten Auslegerabschnitt (502c) aufgehängt ist; und
- einen vierten Auslegerabschnitt (502d), der senkrecht zu dem ersten Auslegerabschnitt (502a) und dem zweiten Auslegerabschnitt (502b) auf einer gegenüberliegenden Seite des Körpers (501a) im Vergleich zu dem dritten Auslegerabschnitt (502c) angeordnet ist, und eine vierte Hebevorrichtung (503d), die an dem vierten Auslegerabschnitt (502d) aufgehängt ist.

8. Automatisiertes Lager- und Entnahmesystem (1) nach einem der vorhergehenden Ansprüche, wobei die erste Kranlaufkatze (603a) entlang des ersten Querträgers (601) bewegbar ist und wobei die Kranlaufkatze (603a) optional zwischen einer Position, in der sie einen Lagerbehälter (106) an und von der Portsäule (119, 120) übergeben kann, und einer Position, in der sie einen Lagerbehälter (106) an und von einem Pufferstapel (60) von Lagerbehältern (106) übergeben kann, bewegbar ist.

9. Automatisiertes Lager- und Entnahmesystem (1) nach einem der vorhergehenden Ansprüche, wobei die Portalanordnung (600) eine zweite Kranlaufkatzenbaugruppe (604) umfasst, die eine zweite Kranlaufkatze (603b) umfasst, die an dem ersten Querträger (601) aufgehängt ist.

10. Automatisiertes Lager- und Entnahmesystem (1) nach einem der vorhergehenden Ansprüche, wobei die Portalanordnung (600) einen zu dem ersten Querträger (601) parallelen zweiten Querträger (602) umfasst und eine Kranlaufkatzenbaugruppe (604), die eine Kranlaufkatze (603d, 603e, 603f) umfasst, an dem zweiten Querträger (602) aufgehängt ist.

11. Automatisiertes Lager- und Entnahmesystem (1) nach einem der vorhergehenden Ansprüche 9-10,
wobei die Heberahmen (504) auf einer Höhe über einem obersten Teil eines Lagerbehälters (106), der von dem Behälterträger (35) des ersten Typs eines Behälterhandhabungsfahrzeugs (30) getragen wird, anhebbar und dazu ausgelegt sind, einen Lagerbehälter (106) zwischen dem Behälterträger (35) und der Portsäule (119, 120) zu übergeben.

12. Verfahren zum Übergeben eines Lagerbehälters (106) von einer Lagerposition in einem Stapel (107) von Lagerbehältern an einen Portbereich (50) eines Schienensystems (108) eines automatisierten Lager- und Entnahmesystems (1) nach einem der vorhergehenden Ansprüche 1-11, wobei das Verfahren die folgenden Schritte umfasst:
- Verwenden der ersten Hebevorrichtung (503a) des Krans (501), um einen Lagerbehälter (106) von dem Stapel (107) zu greifen, und Anheben der ersten Hebevorrichtung (503a) in eine angehobenen Position mit dem Lagerbehälter (106);
- Positionieren des Behälterträgers (35) des ersten Typs eines Behälterhandhabungsfahrzeugs (30) direkt unter der angehobenen ersten Hebevorrichtung (503a);
- Absenken der ersten Hebevorrichtung (503a) mit dem Lagerbehälter (106), um den Lagerbehälter auf dem Behälterträger (35) des ersten Typs eines Behälterhandhabungsfahrzeugs (30) abzusetzen;
- Bewegen des ersten Typs eines Behälterhandhabungsfahrzeugs (30) mit dem Lagerbehälter (106) zu der Portalanordnung (600) an dem Portbereich (50) des Schienensystems (108);
- entweder a) Bewegen des ersten Typs eines Behälterhandhabungsfahrzeugs (30), sodass sich der Behälterträger (35) direkt unter der Kranlaufkatzenbaugruppe (604) der Portalanordnung (600) befindet, oder b) Positionieren der Kranlaufkatzenbaugruppe (604) der Portalanordnung (600) direkt über dem Behälterträger (35) des ersten Typs eines Behälterhandhabungsfahrzeugs (30); und
- Greifen des Lagerbehälters (106) von dem Behälterträger (35) unter Verwendung des ersten Heberahmens (504) der Kranlaufkatzenbaugruppe (604).

13. Verfahren nach Anspruch 12, das den Schritt des Absenkens des Lagerbehälters (106) durch die Portsäule (119, 120) zu dem unteren Ende der Portsäule (119, 120) umfasst.

14. Verfahren nach Anspruch 12 oder 13, das den Schritt des Positionierens des Lagerbehälters (106) in einem Stapel von Lagerbehältern an dem Portbereich (50) umfasst.

15. Verfahren nach Anspruch 12, 13 oder 14, das den Schritt des vorübergehenden Lagerns des Lagerbehälters (106) an der Kranlaufkatzenbaugruppe (604) der Portalanordnung (600) umfasst.

## Revendications

1. Système de stockage et de récupération automatisé (1) comprenant un système de rails (108) bidimensionnels comprenant un premier ensemble de rails parallèles (110) dans un plan horizontal agencé pour guider le déplacement de véhicules de manutention de conteneurs (201, 301, 401, 501) dans une première direction (X) d'un bout à l'autre du sommet d'une structure de cadre (100), et un deuxième ensemble de rails parallèles (111) dans le plan horizontal agencé perpendiculaire au premier ensemble de rails parallèles (110) pour guider le déplacement des véhicules de manutention de conteneurs (201, 301, 401, 501) dans une deuxième direction (Y) qui est perpendiculaire à la première direction (X), la structure de cadre (100) définissant une pluralité de colonnes de stockage (105) pour loger des piles verticales de conteneurs de stockage (106),
le système de stockage et de récupération automatisé (1) comprenant :
- un premier type de véhicule de manutention de conteneur (30) fonctionnant sur le système de rails (108), le premier type de véhicule de manutention de conteneur (30) comprenant un premier jeu de roues (30b) pour déplacement sur le système de rails (108) dans la première direction (X) et un deuxième jeu de roues (30c) pour déplacement sur le système de rails (108) dans la deuxième direction (Y), et un support de conteneur (35) pour supporter un conteneur de stockage (106), le support de conteneur (35) étant configuré pour recevoir un conteneur de stockage (106) depuis le dessus ;
- une grue (501) comprenant un premier dispositif de levage (503a) comprenant un premier cadre de levage (504) suspendu à des bandes de levage (505), le premier cadre de levage (504) étant relevable à un niveau au-dessus d'une partie la plus haute d'un conteneur de stockage (106) supporté par le support de conteneur (35) du premier type de véhicule de manutention de conteneur (30) et étant configuré pour transférer un conteneur de stockage (106) stocké dans une pile de conteneurs de stockage (107) jusqu'au support de conteneur (35) du premier type de véhicule de manutention de conteneur (30) ;
**caractérisé en ce que**, le système de stockage et de récupération automatisé comprend en outre
- une colonne de chargement (119, 120) à travers laquelle un conteneur de stockage (106) peut être transféré entre une extrémité supérieure et une extrémité inférieure de la colonne de chargement (119, 120) ; et
- un agencement de portique (600) agencé au niveau d'une zone de chargement (50) du système de rails (108), zone de chargement (50) au niveau de laquelle les extrémités supérieures des colonnes de chargement (119, 120) sont agencées, l'agencement de portique (600) comprenant une première traverse (601), un ensemble chariot de grue (604) comprenant un premier chariot de grue (603a) suspendu à la première traverse (601) et un premier cadre de levage (504) suspendu par des bandes de levage (505) au chariot de grue (603a),
le cadre de levage (504) étant relevable à un niveau au-dessus d'une partie la plus haute d'un conteneur de stockage (106) supporté par le support de conteneur (35) du premier type de véhicule de manutention de conteneur (30) et étant configuré pour transférer un conteneur de stockage (106) entre le support de conteneur (35) et la colonne de chargement (119, 120).

2. Système de stockage et de récupération automatisé selon la revendication 1, dans lequel la grue (501) est un deuxième type de véhicule de manutention de conteneur (501) fonctionnant sur le système de rails (108) et comprenant un premier jeu de roues (501b) pour déplacement sur le système de rails (108) dans la première direction (X) et un deuxième jeu de roues (501c) pour déplacement sur le système de rails (108) dans la deuxième direction (Y).

3. Système de stockage et de récupération automatisé (1) selon la revendication 1 ou la revendication 2, dans lequel l'agencement de portique (600) est dans une position fixe par-dessus la zone de chargement (50).

4. Système de stockage et de récupération automatisé (1) selon l'une quelconque des revendications précédentes 1 à 3, dans lequel la grue (501) comprend une première section en porte-à-faux (502a) et dans lequel le premier dispositif de levage (503a) est suspendu à la première section en porte-à-faux (502a), et facultativement la grue (501) étant configurée pour prendre des conteneurs de stockage (106) de deux piles (107) différentes sur des côtés différents de la grue (501).

5. Système de stockage et de récupération automatisé (1) selon la revendication 4, dans lequel la grue (501) comprend une deuxième section en porte-à-faux (502b) et un deuxième dispositif de levage (503b), la deuxième section en porte-à-faux (502b) étant agencée sur une partie opposée d'un corps (501a) de la grue (501) relativement à la première section en porte-à faux (502a), et le deuxième dispositif de levage (503b) étant suspendu à la deuxième section en porte-à-faux (502b).

6. Système de stockage et de récupération automatisé (1) selon la revendication 5, dans lequel le deuxième dispositif de levage (503b) est configuré pour fonctionnement simultané avec le premier dispositif de levage (503a).

7. Système de stockage et de récupération automatisé (1) selon la revendication 5 ou la revendication 6, dans lequel la grue (501) comprend :
- une troisième section en porte-à-faux (502c) agencée perpendiculaire à la première section en porte-à-faux (502a) et à la deuxième section en porte-à-faux (502b), et un troisième dispositif de levage (503c) suspendu à la troisième section en porte-à-faux (502c) ; et
- une quatrième section en porte-à-faux (502d) agencée perpendiculaire à la première section en porte-à-faux (502a) et à la deuxième section en porte-à-faux (502b) sur un côté opposé du corps (501a) comparé à la troisième section en porte-à-faux (502c), et un quatrième dispositif de levage (503d) suspendu à la quatrième section en porte-à-faux (502d).

8. Système de stockage et de récupération automatisé (1) selon l'une quelconque des revendications précédentes, dans lequel le premier chariot de grue (603a) est mobile le long de la première traverse (601), et facultativement dans lequel le chariot de grue (603a) est mobile entre une position où il peut transférer un conteneur de stockage (106) jusqu'à et depuis la colonne de chargement (119, 120) et une position où il peut transférer un conteneur de stockage (106) jusqu'à et depuis une pile tampon (60) de conteneurs de stockage (106).

9. Système de stockage et de récupération automatisé (1) selon l'une quelconque des revendications précédentes, dans lequel l'agencement de portique (600) comprend un deuxième ensemble chariot de grue (604) comprenant un deuxième chariot de grue (603b) suspendu à la première traverse (601).

10. Système de stockage et de récupération automatisé (1) selon l'une quelconque des revendications précédentes, dans lequel l'agencement de portique (600) comprend une deuxième traverse (602) parallèle à la première traverse (601), et un ensemble chariot de grue (604) comprenant un chariot de grue (603d, 603e, 603f) est suspendu à la deuxième traverse (602).

11. Système de stockage et de récupération automatisé (1) selon l'une quelconque des revendications précédentes 9 à 10,
dans lequel les cadres de levage (504) sont relevables à un niveau au-dessus d'une partie la plus haute d'un conteneur de stockage (106) supporté par le support de conteneur (35) du premier type de véhicule de manutention de conteneur (30) et sont configurés pour transférer un conteneur de stockage (106) entre le support de conteneur (35) et la colonne de chargement (119, 120).

12. Procédé de transfert d'un conteneur de stockage (106) d'une position de stockage dans une pile (107) de conteneurs de stockage jusqu'à une zone de chargement (50) d'un système de rails (108) d'un système de stockage et de récupération automatisé (1) selon l'une quelconque des revendications précédentes 1 à 11, le procédé comprenant les étapes consistant à :
- utiliser le premier dispositif de levage (503a) de la grue (501) pour prendre un conteneur de stockage (106) de la pile (107) et relever le premier dispositif de levage (503a) dans une position relevée avec le conteneur de stockage (106) ;
- positionner le support de conteneur (35) du premier type de véhicule de manutention de conteneur (30) directement en dessous du premier dispositif de levage (503a) relevé ;
- abaisser le premier dispositif de levage (503a) avec le conteneur de stockage (106) pour abaisser le conteneur de stockage sur le support de conteneur (35) du premier type de véhicule de manutention de conteneur (30) ;
- déplacer le premier type de véhicule de manutention de conteneur (30) avec le conteneur de stockage (106) jusqu'à l'agencement de portique (600) au niveau de la zone de chargement (50) du système de rails (108) ;
- soit a) déplacer le premier type de véhicule de manutention de conteneur (30) de telle manière que le support de conteneur (35) soit directement en dessous de l'ensemble chariot de grue (604) de l'agencement de portique (600), soit b) positionner l'ensemble chariot de grue (604) de l'agencement de portique (600) directement au-dessus du support de conteneur (35) du premier type de véhicule de manutention de conteneur (30) ; et
- prendre le conteneur de stockage (106) du support de conteneur (35) à l'aide du premier cadre de levage (504) de l'ensemble chariot de grue (604).

13. Procédé selon la revendication 12, comprenant l'étape consistant à abaisser le conteneur de stockage (106) à travers la colonne de chargement (119, 120) jusqu'à l'extrémité inférieure de la colonne de chargement (119, 120).

14. Procédé selon la revendication 12 ou la revendication 13, comprenant l'étape consistant à positionner le conteneur de stockage (106) dans une pile de conteneurs de stockage au niveau de la zone de chargement (50).

15. Procédé selon la revendication 12, la revendication 13, ou la revendication 14, comprenant l'étape consistant à stocker temporairement le conteneur de stockage (106) au niveau de l'ensemble chariot de grue (604) de l'agencement de portique (600).
